# EUROPEAN PATENT SPECIFICATION

(11) **EP 2 023 248 B1**
(45) Date of publication and mention of the grant of the patent: **24.10.2018**
(21) Application number: 07742273.1
(22) Date of filing: 24.04.2007
(51) Int. Cl.: G06F 11/28, G06F 21/10, G06F 21/62, G06F 21/74, G06F 21/14, G06F 11/36

(54) **DATA PROCESSING DEVICE, METHOD, PROGRAM, INTEGRATED CIRCUIT, AND PROGRAM GENERATING DEVICE**
DATENVERARBEITUNGSEINRICHTUNG, VERFAHREN, PROGRAMM, INTEGRIERTE SCHALTUNG UND PROGRAMMERZEUGUNGSEINRICHTUNG
DISPOSITIF DE TRAITEMENT DE DONNEES, PROCEDE, PROGRAMME, CIRCUIT INTEGRE, ET DISPOSITIF DE GENERATION DE PROGRAMME

(30) Priority: 24.04.2006 JP 2006118881
(43) Date of publication of application: 11.02.2009
(73) Proprietor: Panasonic Intellectual Property Management Co., Ltd., Osaka-shi, Osaka 540-6207 (JP)
(72) Inventor: MAEDA, Manabu c/o Panasonic Corporation IPROC, Osaka-shi Osaka 540-6207 (JP); MATSUSHIMA, Hideki c/o Panasonic Corporation IPROC, Osaka-shi Osaka 540-6207 (JP); ITO, Yoshikatsu c/o Panasonic Corporation IPROC, Osaka-shi Osaka 540-6207 (JP)
(74) Representative: Grünecker Patent- und Rechtsanwälte PartG mbB
(86) International application number: PCT/JP2007/058838
(87) International publication number: WO 2007/125911

(56) References cited:
- WO-A1-2005/091143
- JP-A- 2004 509 392
- US-A- 4 937 864
- US-A1- 2003 014 643

## Description

### Technical Field

The present invention relates to protection of a computer program, and particularly relates to a technique to control execution of debugging of a computer program.

### Background Art

Techniques for protecting computer programs that should not be subject to unauthorized acts, such as unauthorized analysis, have been broadly used. An example of such programs (hereinafter called "protected programs") is a program for managing copyrights. If such programs are not protected adequately, damages might be caused not only to the right holder of the program but also on a variety of fronts.

For example, if a malicious person can tamper with a computer program for decoding and playing back encrypted digital contents, the contents might be used in unauthorized ways. Specifically, the malicious person might play back the content without authorization. Also, even if the number of times a user is allowed to play back or copy the digital content is limited, the malicious person might eliminate the limitation.

As a technique for protecting computer programs, etc. against unauthorized analysis by a malicious person and so on, a Non-patent Document 1 shown below discloses an LSI (Large Scale Integration) technique that structures a secure domain having a mechanism for preventing external unauthorized accesses, provides a secure mode for performing processing within the secure domain and a normal mode for performing processing without using the secure domain, and switches between the normal mode and the secure mode while operating. According to this technique, protected programs run only in the secure mode such that the programs are protected against unauthorized analysis and so on.

By the way, for developing programs that run within the secure domain, it is necessary to debug the programs in order to guarantee proper operations and remove program discrepancies. However, if anybody is allowed to debug the programs, a malicious person might debug the programs and get a toehold for unauthorized analysis, etc. of the program. Therefore, it is necessary to limit the scope of the target to be allowed to debug the program to only relevant people such as the developers of the program.

For this purpose, a technique for allowing only people who know a prescribed authentication code to debug the programs running within the secure domain have been used as a conventional art (See Patent Document 1 below). Specifically, according to the technique of the Patent Document 1, only people who pass the authentication using the authentication code can perform the debugging.

As a result, people who do not know the authentication code can not pass the authentication. Accordingly, it is possible to prevent unauthorized people from debugging the programs running within the secure domain.

Patent Document 1: Japanese Laid-open Patent Application Publication No. 2004-171565

Non-patent Document 1: TrustZone - Integrated Hardware and Software security (http://www.arm.com/pdfs/TZ_Whitepaper.pdf)

Patent document US 4937864 discloses technology of permitting the use of a debug routine only when the key number 155 recorded on the disk 119 matches the key number, stored in the table 152, of the debug routine. In other words, this technology permits only the person who owns the disk, namely an authorized person, to use the debug routine corresponding to the key number recorded on the disk. A person who does not own the disk is prohibited from using the debug routine.

Patent document US 2003/0014643 discloses a debugger comprising an authorization device 3 which is operated in order to allow or prohibit use of the debugging functions, for address ranges defined in a user code and a firmware.

### Disclosure of the Invention

### Problems to be Solved by the Invention

According to the technique of the Patent Document 1 above, it is possible to protect the programs only if the authentication code is under an appropriate management and the relevant people to the program is limited to, for example, a particular group within a single company.

On the other hand, there recently are some cases where a plurality of programs, designed to run in relation to each other, are separately developed by different right holders in order to reduce the load of developing the programs. For example, in the case of exporting music contents distributed according to the OMA DRM (Open Mobile Alliance Digital Rights Management) standard into an SD memory card (Secure Digital Memory Card) according to the SD-Audio standard, a program for performing processing based on the OMA DRM standard and a program for performing processing based on the SD-Audio standard are separately developed by different right holders, and these programs run in relation to each other.

If at least part of the plurality of programs which run in relation to each other are protected programs, and if any problem happens while developing the plurality of programs, the developers are required to debug the protected programs and the other programs at the same time. Here, if the right holder of the protected programs and the right holder of the other programs are not the same, developers on the side of the right holders of the protected program also have to debug the other programs without rights, and vice versa.

However, the technique of the Patent Document 1 uses the authentication code to control whether to allow debugging of programs running within the secure domain. Therefore, anybody who knows the authentication code can debug all the programs that run within the secure domain.

If the developers of the other programs sated above know the authentication code, they can debug not only the programs pertaining to the relational operations, but also all the protected programs. As a result, if the developers obtain the protected programs, they can debug the protected programs even if the right holder of the protected programs desires the programs should not debugged. This means that in the case of co-developing a plurality of programs, the right holder take a great risk that protected programs that the right holder desires not debugged can be analyzed for example and confidential information leaks. Because of such risks, it is difficult to co-develop programs that run in relation with each other among different right holders while protecting the programs.

In view of the problem described above, the present invention aims to provide a data processing apparatus, a data processing method, an integrated circuit, a program for controlling execution of debugging and a program generation apparatus that are capable of realizing easy co-developing of a program among different right-holders while protecting the program.

### Means for solving the problem

The above mentioned objects are achieved by the teaching of the independent claims.

### Effect of the invention

The data.processing apparatus as one aspect of the present invention compares the acquired verification value and the identifier of the debugging unit, and controls whether to permit the debugging unit to execute the debugging based on the comparison result. This means that if a right holder of a program includes a certain verification value into the program, the verification value determines the identifier of the debugging unit to be permitted to debug the program. Accordingly, the right holder of the program can specify the identifier of the debugger to be permitted to debug the program with use of the verification value that the right holder includes into the program.

In other words, the right holder of the program can restrict debugging of the program only to debuggers that have permitted identifiers, according to the right holder's wish. This prevents people concerned who own debugging units without the permitted identifiers, from debugging the program.

In this regard, the right holder of the program sometimes wishes to limit where the other right holders can debug only to certain parts of the program. For example, if the program includes information to be kept secret, the right holder of the program naturally wishes to prevent the secret information frombeing analyzed, because damages might arise on many fronts if the secret information is exposed.

Given this wish, the prescribed part of the target program may include an access control list that shows whether to permit an access to each of parts constituting the target program, the second acquiring unit may include an access control list acquiring subunit operable to acquire the access control list from the prescribed part of the target program, the data processing apparatus may further comprise an access judging unit operable to make an judgment on whether the access to each of parts constituting the target program is permitted according to the access control list acquired by the access control list acquiring subunit, and the control unit may prohibit execution of debugging of a given part of parts constituting the target program when the judging unit judges that the debugging of the target program is permitted and when the access judging unit judges that the access to the given part of parts constituting the target program is not permitted, and permit the debugging unit to execute the debugging of the given part of parts constituting the target program when the judging unit judges that the debugging of the target program is permitted and when the access judging unit judges that the access to the given part of parts constituting the target program is permitted.

With the stated structure, it is possible to prevent the part that includes the information to be kept secret, from being debugged.

More specifically, the access control list may include a plurality of address ranges, the plurality of the address ranges respectively corresponding to parts constituting the target program, the access control list may include a plurality of pieces of access information, each of the plurality of the pieces of the access information indicating whether to permit the access to each of parts constituting the target program, the plurality of the address ranges respectively corresponding to the plurality of the pieces of the access information, and the access judging unit may make the judgment by referring to the access information that corresponds to the given part of parts constituting the target program.

. With the stated structure, it is possible to restrict debugging of the secret information located at a certain memory address.

In addition, the access control list may include a plurality of symbols, one of the plurality of the symbols being included in each of parts constituting the target program, the access control list may include a plurality of pieces of access information, each of the plurality of the pieces of the access information indicating whether to permit the access to each of parts constituting the target program, the plurality of the symbols respectively corresponding to the plurality of the pieces of the access information, and the access judging unit may make the judgment by referring to the access information that corresponds to a symbol included in the given part of parts constituting the target program.

With the stated structure, it is possible to restrict debugging of a certain symbol. In the case the symbol handles the secret information, it is possible to protect the secret information by simply specifying the symbol.

In this regard, there are cases the right holder of the program wishes to flexibly determine the strength of the protection of the program for each of the people concerned. For example, the right holder may wish to generously permit debugging units belonging to affiliated companies to execute the debugging, but may wish to restrict debugging units belonging to outsiders, from execution of the debugging of the secret information and so on of the program.

In view of this, the prescribed part of the target program may include a plurality of the verification values, the prescribed part of the target program may include a plurality of the access control lists, each of the plurality of the verification values corresponding to at least one of the plurality of the access control lists, the judging unit may make the judgment by comparing each of the plurality of the verification values with the identifier, and the access judging unit may make the judgment based on one of the plurality of the access control lists corresponding to one of the plurality of the verification values, when the judging unit judges that the one of the plurality of the verification values matches the identifier.

With the stated structure, it is possible to specify a debuggable part for each of debugging units that have identifiers corresponding to the verification values. In other words, the right holder of the program can determine parts to be protected, for each of the identifiers of the debugging units.

The data processing apparatus may further comprise a display unit, wherein the control unit may include a display control subunit operable to control the display unit to show that the execution of the debugging of the given part of the target program is prohibited when the control unit prohibits execution of debugging of the given part of parts constituting the target program, and to control the display unit to show a result of the debugging of the given part of the target program when the control unit permits execution of debugging of the given part of parts constituting the target program.

With the stated structure, the person who performs the debugging can know whether the debugging has been permitted.

In the data processing unit described above, the judging unit may compare the identifier and the verification value, and judge that the debugging of the target program is permitted when the identifier matches the verification value.

With the stated structure, the right holder of the program can use the verification value to specify a debugging unit to be permitted to execute the debugging.

In addition, the judging unit may include a comparison value holding subunit operable to store a comparison value, the comparison value holding subunit being protected against the unauthorized access, and the judging unit may perform a prescribed calculation using the verification value and the identifier, and judge that the debugging of the target program is permitted when a result of the prescribed calculation matches the comparison value stored in the comparison value holding subunit.

With the stated structure, the judgment is performed with use of the prescribed calculation and the comparison value. Therefore, even if the verification value is exposed by any unauthorized manner, it is difficult to acquire the identifier of the debugging unit that is permitted to perform the debugging based on the verification value. In other words, the stated structure can improve the protection level of the program.

The data processing apparatus may further comprise a secure domain, the secure domain comprising a mechanism for preventing an unauthorized access from outside, wherein the data processing apparatus may switch between a normal mode and secure mode, and use the secure domain to perform an operation in the secure mode, the data processing apparatus may further comprise a switching unit operable to switch between the normal mode and the secure mode, a normal program that runs in the normal mode may be capable of accessing a secure program that runs in the secure mode, by sending a request for prescribed processing to the secure program via the switching unit, the target program may be stored within the secure domain, the second acquiring unit may acquire the verification value from the prescribed part of the target program within the secure domain, and the judging unit may make the judgment within the secure domain.

With the stated structure, the target program is stored with use of the secure domain, and the second acquiring unit acquires the verification value with use of the secure domain.

Therefore, it is difficult for the people concerned, unauthorized people, and so on to know the verification value during the acquisition of the verification value by the data processing apparatus. Even if the unauthorized people or the likes acquire the program, it is difficult for them to specify the debugging unit that has the identifier that is permitted to execute the debugging of the program. Accordingly, it is possible to reduce the risk of unauthorized debugging of the program. Also, since the program includes the verification value, it is unnecessary to store information for controlling whether to permit the debugging in the data processing apparatus in advance.

In this structure, the debugging unit may reside outside of the secure domain and operate in the normal mode, the data processing apparatus may further comprise a secure debugger that is included in the secure domain and performs debugging in the secure mode, the debugging unit may output a request for debugging the target program to the control unit, and according to the request, the control unit may control the judging unit to make the judgment, and when the judging unit judges that the debugging of the target program is not permitted, prohibit the secure debugger from debugging the target program relating to the request.

With the stated structure, since the debugging unit that operates in the normal mode and the secure debugger that operates in the secure mode are provided, the secure debugger will not be affected even if the debugging unit is tampered with for example, and it is possible to prevent unauthorized analysis of the program that runs in the secure mode.

Also in this structure, theprescribedpart of the target program may include an access control list that shows whether to permit an access to each of parts constituting the target program, the second acquiring unit may include an access control list acquiring subunit operable to acquire the access control list from the prescribed part of the target program, the data processing apparatus may further comprise an access judging unit operable to make an judgment on whether the access to each of parts constituting the target program is permitted according to the access control list acquired by the access control list acquiring subunit the access judging unit may make the judgment within the secure domain, and the control unit may prohibit the secure debugger from execution of the debugging of a given part of parts constituting the target program relating to the request when the judging unit judges that the debugging of the target program is permitted and when the access judging unit judges that the access to the given part of parts constituting the target program is not permitted, and permit the secure debugger to execute the debugging of the given part of parts constituting the target program when the judging unit judges that the debugging of the target program is permitted and when the access judging unit judges that the access to the given part of parts constituting the target program is permitted.

With the stated structure, the right holder of the program can prevent the part that includes the information to be kept secret from being debugged.

Also, in the case where the program cooperates with another program, the following structure may be applied:

The debugging unit may have a function to debug the normal program and may not have a function to debug the target program that cooperates with the normal program, and when the debugging unit performs the debugging of the target program, the debugging unit may output to the control unit the request for debugging the target program, and the control unit may control the secure debugger to debug the target program in response to the request, the secure debugger having a function to debug the target program that cooperates with the normal program.

With the stated structure, no matter whether the program that cooperates with another program is a program that runs in the normal mode or the secure mode, the debugging unit that operates in the normal mode can debug the programs at the same time. Therefore, it is possible to efficiently develop the program that cooperates with another.

In this regard, the program that runs in the normal mode can not directly access the program that runs in the secure mode. Accordingly, the debugging unit that operates in the normal mode can not know when the debug target program has started operating in the secure mode. This makes it difficult for the developer of the program to debug the debug target program that operates in the secure mode.

In view of this, the debugging unit may output via the control unit to the secure debugger a process identifier that identifies the normal program which the debugging unit can debug, and the secure debugger may change an instruction located at an entry point of the target program to a break instruction, the target program cooperating with the normal program indicated by the process identifier output by the debugging unit.

With the stated structure, the data processing apparatus temporarily stops its operation when the target program starts running. Therefore, the developer of the program can configure the setting for the debugging.

Also, in the data processing apparatus, when a debug exception is detected during execution of the target program in the secure mode, the control unit may further transmit a notification of the debug exception to the debugging unit, upon receiving the notification, the debugging unit may output to the control unit a request for generating debug information showing a debug result, and upon receiving the request for generating the debug information, the control unit may control the secure debugger to debug the target program to generate the debug information when the judging unit judges that the debugging of the target program is permitted, and output the generated debug information to the debugging unit.

With the stated structure, the developer of the program who is permitted to perform the debugging can know the result of the debugging of the program that runs in the secure mode.

The data processing apparatus may further comprise:a first result display unit operable to display a result of debugging of the normal program in a first display area; and a second result display unit operable to display a result of debugging of the target program that cooperates with the normal program in a second display area, which is different from the first display area, wherein when the target program and the normal program which cooperate with each other are running, the first result display unit may display the result of the debugging of the normal program in the first display area, and the second result display unit may display the result of the debugging of the target program in the second display area.

With the stated structure, the developer of the program can check the operations of the normal program and the target program at the same time while performing the debugging.

A normal OS may operate in the normal mode, a protected OS may operate in the secure mode, the normal program may operate in the normal mode, as a process generated by the normal OS, the debugging unit may operate in the normal mode, as a debugger that operates on the normal OS, the target program may operate in the secure mode, as a process generated by the protected OS, and the secure debugger may be implemented as a function of the protected OS.

Also, according to the request for debugging the target program output by the debugging unit, the control unit may control the judging unit to make the judgment, and when the judging unit judges that the debugging of the target program is not permitted, output a debug prohibition notification, showing that the debugging of the target program is prohibited, to the debugging unit.

With the stated structure, a user who performs the debugging using the debugging unit can be informed if the debugging of the target program is not permitted.

The program stated above is generated in the following manner.

One aspect of the present invention provides a program generation apparatus, comprising: a program acquiring unit operable to acquire a program that includes protection information that is to be kept secret; a verification value generation unit operable to generate a verification value used for judgment on whether to permit a debugging unit to debug the acquired program based on an identifier of the debugging unit; and a protected-program generation unit operable to generate a protected program by adding the verification value to the acquired program.

The program generation apparatus may further comprise an access control list acquiring unit operable to acquire an access control list that shows whether to permit an access thereto to each of parts constituting the program, wherein the protected-program generation unit may include an access control list adding subunit operable to add the acquired access control list to the program.

With the stated structure, the developer of the program can include the verification value into the program. Accordingly, it is possible to control the execution of the debugging of the program according to the developer's intention.

One exemplary aspect of the present invention provides a data processing method for controlling execution of debugging performed by a debugging unit, the data processing method comprising: acquiring from the debugging unit an identifier of the debugging unit; acquiring a verification value included in a prescribed part of a target program that is a target of debugging and protected against an unauthorized access; making a comparison between the identifier and the verification value, and making a judgment on whether the debugging of the target program is permitted according to a result of the comparison; and prohibiting the execution of the debugging of the target program when the judging unit judges that the debugging of the target program is not permitted.

One exemplary aspect of the present invention provides a computer-readable control program that causes a data processing apparatus to control execution of debugging performed by a debugging unit, the control program comprising: acquiring from the debugging unit an identifier of the debugging unit; acquiring a verification value included in a prescribed part of a target program that is a target of debugging and protected against an unauthorized access; making a comparison between the identifier and the verification value, and making a judgment on whether the debugging of the target program is permitted according to a result of the comparison; and prohibiting the execution of the debugging of the target program when the judging unit judges that the debugging of the target program is not permitted.

One exemplary aspect of the present invention provides an integrated circuit used in a data processing apparatus that controls execution of debugging performed by a debugging unit, the integrated circuit comprising: a first acquiring unit operable to acquire from the debugging unit an identifier of the debugging unit; a second acquiring unit operable to acquire a verification value included in a prescribed part of a target program that is a target of debugging and protected against an unauthorized access; a judging unit operable to make a comparison between the identifier and the verification value, and make a judgment on whether the debugging of the target program is permitted according to a result of the comparison; and a control unit operable to prohibit the execution of the debugging of the target program when the judging unit judges that the debugging of the target program is not permitted.

One exemplary aspect of the present invention provides a program generation method comprising: acquiring a program that includes protection information that is to be kept secret; generating a verification value used for judgment on whether to permit a debugging unit to debug the acquired program based on an identifier of the debugging unit; and generating a protected program by adding the verification value to the acquired program.

One exemplary aspect of the present invention provides a computer-readable control program that causes a program generation apparatus to generate a program, the control program comprising: acquiring a program that includes protection information that is to be kept secret; generating a verification value used for judgment on whether to permit a debugging unit to debug the acquired program based on an identifier of the debugging unit; and generating a protected program by adding the verification value to the acquired program.

One exemplary aspect of the present invention provides an integrated circuit used in a program generation apparatus that generates a program, the integrated circuit comprising: a program acquiring unit operable to acquire a program that includes protection information that is to be kept secret; a verification value generation unit operable to generate a verification value used for judgment on whether to permit a debugging unit to debug the acquired program based on an identifier of the debugging unit; and a protected-program generation unit operable to generate a protected program by adding the verification value to the acquired program.

### Brief Description of the Drawings

FIG. 1 schematically shows a data processing apparatus pertaining to the first embodiment of the present invention;
FIG. 2 is a detailed block diagram showing a debug function 7;
FIG. 3 is a detailed block diagram.of a debugger ID judging unit 22;
FIG. 4 is a block diagram of a switching device driver 13;
FIG. 5 shows an encrypted protected-program 73;
FIGs. 6A and 6B show data structures of an access control list 53 acquired by an access judging unit 23;
FIG. 7 shows operations of a debug function 7;
FIG. 8 is a flowchart showing execution of a normal program 12 and a protected program 8 where debugging is not performed;
FIG. 9 is a flowchart showing operations of the normal program 12 where the normal program 12 requires execution of functions of the protected program 8;
FIG. 10 is a flowchart showing operations performed by the normal program 12 for completing use of a protected program 8a;
FIG. 11 is a flowchart showing preprocessing procedures performed by the debugger 14 to debug the normal program 12 and the protected program 8;
FIG. 12 is a flowchart showing debugging of a protected program 8a using the debugger 14 when a debug exception has caused due to a break point during execution of the protected program 8a:
FIG. 13 shows a method for generating the protected program 8 pertaining to the present invention;
FIG. 14 shows the structure of a protected-program generation apparatus 72;
FIG. 15 is a flowchart showing generation of the encrypted protected-program 73 performed by the protected-program generation apparatus 72;
FIG. 16 shows how a debugger ID management server manages debugger IDs;
FIG. 17 shows the data structure of a debugger ID management file 90 used by a debugger ID management server 81 to manage debugger IDs;
FIGs. 18A and 18B show a graphical user interface (GUI) for showing operational information of a program; and
FIG. 19 shows how to display a character-based user interface (CUI) of the fifth embodiment of the present invention.

### Explanation of References

- 1: data processing apparatus
- 2: LSI
- 3: switching mechanism
- 6: protected OS
- 7: debug function
- 8: protected program
- 11: normal OS
- 12: normal program
- 13: switching device driver
- 14: debugger
- 15: debugger-use switching device driver
- 21: control unit
- 22: debugger ID judging unit
- 23: access judging unit
- 24: secure debugger
- 25: debug information acquiring unit
- 26: break point setting unit
- 27: register value acquiring/setting unit
- 28: memory value acquiring/setting unit
- 31: debugger ID comparing unit
- 32: debugger ID computing unit
- 33: comparison value storing unit
- 41: switching operation unit
- 42: request sorting unit
- 43: normal request receiving unit
- 44: debug request receiving unit
- 51: protected-program body
- 52: permitted-debugger ID information
- 53: access control list
- 54: decryption-use header information
- 60: access control list
- 61: start address
- 62: end address
- 63: access permission information
- 64: symbol name
- 65: access permission information
- 71: protected-program source code
- 72: protected-program generation apparatus
- 73: encrypted protected-program
- 74: permitted-debugger ID storage file
- 75: access control list storage file
- 76: confidential information area storage file
- 77: compiler
- 78: linker
- 79: protected-program generating tool
- 81: debugger ID management server
- 82: protected-program developing apparatus
- 83: protected-program analyzing apparatus
- 90: debugger ID management file
- 91: management number
- 92: debugger ID
- 93: developer name of protected program
- 94: contact information
- 150: GUI
- 151: code display unit
- 152: register display unit
- 153: memory display unit
- 154: symbol display unit
- 155: watch point display unit
- 156: call stack display unit
- 157: window title display unit
- 158: menu display unit
- 159: mode display unit
- 160: debug window for normal programs
- 161: debug window for protected programs
- 170: CUI
- 171: example display of debugging results

### Best Mode for Carrying Out the Invention

The following describes embodiments of the present invention with reference to the drawings.

### 1. The first embodiment

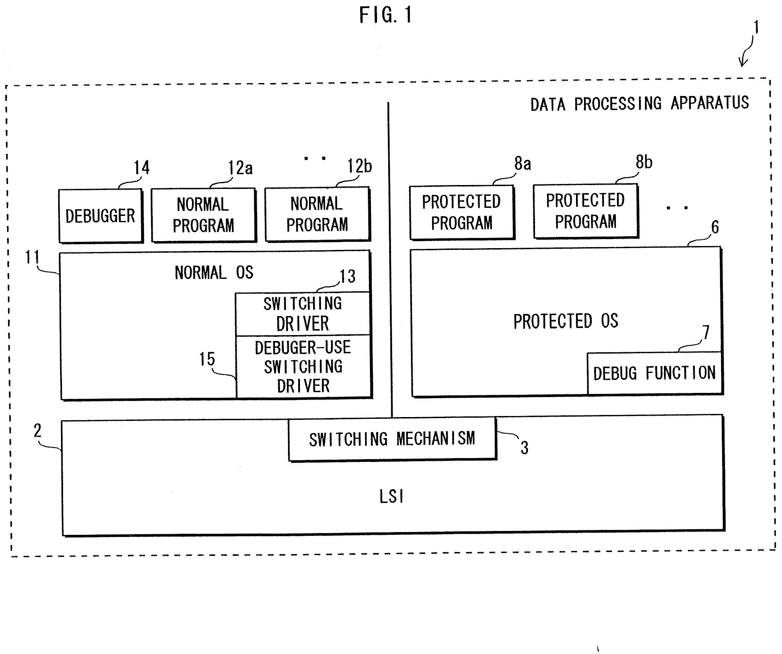

FIG. 1 schematically shows a data processing apparatus 1 pertaining to the first embodiment of the present invention. The data processing apparatus 1 includes an LSI 12 equipped with a protection mechanism, a switching mechanism 3, a protected OS 6, a debug function 7, a protected program 8 (8a, 8b, ...), a normal OS 11, a normal program 12 (12a, 12b, ...), a switching device driver 13 (hereinafter called the "switching driver 13"), a debugger 14, and a switching device driver 15 for the debugger (hereinafter called the "debugger switching driver 15").

### Explanations for each function block of the first embodiment 1.1.1 LSI 2

In FIG. 1, the LSI 2 is equipped with a protection mechanism for protecting programs against unauthorized analysis and tampering. The protection mechanism includes a hardware mechanism for preventing unauthorized accesses from the outside. For example, the protection mechanism temporarily blocks accesses from the outside.

The LSI 2 is provided with operation modes, namely a protection mode (which may be called a "secure mode") and a normal mode. The LSI 2 switches between the protection mode and the normal mode while operating. This switching of the operation modes is performed with use of the switching mechanism 3, which is described later.

The protection mode is a special mode in which programs are protected by the protection mechanism against unauthorized analysis and tampering. While the LSI 2 is in the protection mode, the protected OS 6 and the protected program 8 run. The normal mode is a general mode in which the programs are not protected by the protection mechanism. While the LSI 2 is in the normal mode, the normal OS 11 and the normal program 12 run.

Switching from the protection mode to the normal mode is performed by the protected OS 6 using the switching mechanism 3. Switching from the normal mode to the protection mode is performed by the switching driver 14 of the normal OS 11, using the switching mechanism 3.

### 1.1.2 Switching mechanism 3

The switching mechanism 3 includes a hardware mechanism, which is for receiving instructions for switching the operations modes from the protected OS 6 or the normal OS 11 and performing processing required for changing the operation modes. The switching of the operation modes may be realized with use of, for example, the technique disclosed in the Non-patent Document 1.

If this is the case, the switching mechanism 3 is capable of operating in either the normal mode or the protection mode, and includes a storage area that is accessible whether the mode is the protection mode or the normal mode. If the LSI 2 is operating in the normal mode, a request from the normal program 12 which runs in the normal mode to the protected program 8 which runs in the protection mode, for example, is to be temporarily stored into the storage area. Upon completion of the switching of the operation modes, the protected OS 6 and the protected program 8 read out the stored information so that communications between the programs that run in the normal mode and the programs that run in the protection mode can be realized.

### 1.1.3 Protected OS 6

The protected OS 6 is an OS for controlling operations of the data processing apparatus 1 while the LSI 2 is operating in the protection mode.

The protected OS 6 performs, for example, management (process management) of the protected program 8 running in the protection mode, resource management, access control among the protected programs with use of a memory management unit (MMU), interrupt processing, switching to the normal mode with use of the switching mechanism 3, and debugging of the protected programs with use of the debug function 7.

### 1.1.4 Debug function 7

The debug function 7 controls execution of the debugging of the protected program 8 performed by the debugger 14.

In other words, the debug function 7 judges whether the debugging of the protected program 8 by the debugger 14 is permitted when the debugger 14 debugs the protected program 8. As a result of the judgment, if the debugger 14 is permitted, the debug function 7 performs processing for the protected program 8 according to requests from the debugger 14. This processing is, for example, acquisition of debug information, setting of break points, acquisition and setting of register values and memory values, and so on. Note that the debug information is information to be used for debugging programs, and shows, for example, correspondence relations between program codes included in the object file and source codes. The debug function 7 uses a stop flag to perform preprocessing for the debugging of the protected program 8. The details of the debug function 7 are described later.

### 1.1.5 Protected program 8

The protected program 8 is an application program that includes information (confidential information) to be protected against unauthorized analysis and tampering.

Examples of the protected program 8 include a decryption key and a decryption algorithm for decryption of encrypted digital contents, rights information that contains rights relating toplayback and copying, and so on. The protected program 8 is kept encrypted until execution of the program starts, in order to prevent unauthorized analysis, and decrypted by the protected OS 6 at the start of the execution.

### 1.1.5.1 Supplementary explanations of the protected program 8

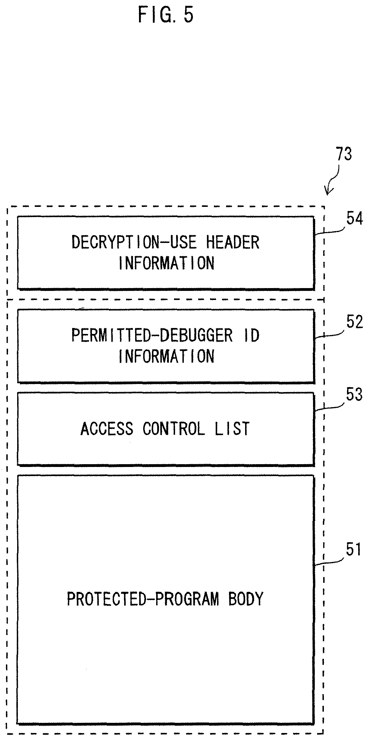

The protected program 8 is kept encrypted until the execution start, as an encrypted protected-program 73 of FIG. 5 is.

As FIG. 5 shows, the encrypted protected-program 73 is composed of a protected program body 51, permitted-debugger ID information 52, an access control list 53, and decryption-use header information 54. The protected program 8 is obtained by decrypting the encrypted protected-program 73 based on the decryption-use header information 54. The protected program 8 is composed of the protected-program body 51, the permitted-debugger ID information 52, and the access control list 53.

### 1.1.5.2 Protected-program body 51

The protected-program body 51 is an executable code of the program.

### 1.1.5.3 Permitted-debugger ID information 52

The permitted-debugger ID information 52 is a verification value for judging whether debugging of the protected program 8 is to be permitted. In this embodiment, the permitted-debugger ID information 52 shows identifiers (debugger IDs) of debuggers that are permitted to debug the protected program 8. In other words, debuggers that have the same IDs as the IDs shown by the permitted-debugger ID information 52 are permitted to debug the protected program 8. The above-described judgment by the debug function is performed based on this permitted-debugger ID information 52.

### 1.1.5.4 Access control list 53

The access control list 53 shows whether accesses to prescribed areas of the protected program 8 are permitted or not. In a word, the access control list 53 shows whether to permit accesses, for each of parts that constitute the protected program 8. The details of the access control list 53 are described later.

### 1.1.5.5 Decryption-use header information 54

The decryption-use header information 54 is information required for decryption of the encrypted protected-program 73. For example, the decryption-use header information 54 contains an algorithm used for the encryption and an address of the memory to which the protected program 8 is loaded. Here, the technique to add necessary information to the encrypted program in order to decrypt the program has been well known as conventional art. Since this technique is not a constituent feature of the present invention, detailed explanations thereof are omitted here.

1.1.5.6 Arrangement of data pieces

In the protected program 8, the permitted-debugger ID information 52, the access control list 53, and a protected program body 51 may be arranged in any way. For example, information that shows arrangement of the permitted-debugger ID information 52 and so on may be added to the program as header information.

Alternatively, it is possible to define the arrangement of the permitted-debugger ID information 52 and so on in advance, and the debug function 7 of the data processing apparatus 1 may read the permitted-debugger ID information 52 according to the definition. For example, a bit number (or a byte number) that shows the position of the permitted-debugger ID information 52 is and a bit number that shows the position of the access control list 53 may be defined in advance. If this is the case, the position of the permitted-debugger ID information 52 is from the top bit to the predetermined bit of the protected program 8, and the position of the access control list 53 is from the predetermined bit to the next predetermined bit.

If there are a plurality of pairs each including the permitted-debugger ID information 52 and the access control list 53, it is possible to include information that shows the number of the pairs at the beginning of the protected program.

Also, information showing the arrangement of the permitted-debugger ID information 52 and so on may be included in the decryption-use header information 54. The debug function 7 can acquire the permitted-debugger ID information 52, the access control list 53 and so on by reading the information showing the position of the permitted-debugger ID information 52 and so on within the protected program 8.

The details of the protected program 8 are explained in the second embodiment below, together with the generation method for the same.

### 1.1.6 Normal OS 11

The normal OS 11 is an OS for controlling the data processing apparatus 1 while the LSI 2 is operating in the normal mode.

In other words, in the normal mode, the normal OS 11 performs management of the normal program 12 running in the normal mode (process management), resource management, interrupt management, and so on.

### 1.1.7 Switching driver 13

The switching driver 13 operates as a device driver for the normal OS 11. The normal program 12 uses the switching driver 13 to communicate with the protected program 8. Note that the debugger 14 uses the debugger-use switching driver 15 to communicate with the debug function 7, which is described later.

Specifically, the switching driver 13 performs passing of communication data between the normal program 12 and the protected program 8, and switching from the normal mode to the protection mode. The passing of communication data is, .in a word, processing for receiving data that has been output from the normal program 12 and outputting the received data to the protected program 8 via the switching mechanism 3, and also, receiving data that has been output from the protected program 8 via the switching mechanism 3, and outputting the received data to the normal program 12.

The details of the switching driver 13 are described later. 1.1.8 Debugger-use switching driver 15.

The debugger-use switching driver 15 operates as a device driver for the normal OS 11, and is used by the debugger 14 communicating with the debug function 7.

The debugger-use switching driver 15 performs passing of communication data between the debugger 14 and the debug function 7, and switching from the normal mode to the protection mode.

### 1.1.9 Normal program 12

The normal program 12 (12a, 12b, ...) is an application program that runs on the normal OS 11.

Using the switching driver 13, the normal program 12 communicates with the protected program 8 that runs in the protection mode, and cooperates with the protected program 8.

### 1.1.10 Debugger 14

The debugger 14 has a function to debug the normal program 12 and a function to debug the protected program 8. The debugger 14 has a debugger ID, which is an identifier for identifying the debugger 14. This debugger ID is used by the debug function 7 to judge whether the debugger is permitted to perform debugging. Management of the debugger ID of the debugger 14 is explained in detail in the third embodiment.

The debugger 14's function for debugging the normal program 12 can be realized as the same function as the application debugger, such as the GDB used in the Linux (TM).

The function for debugging the protected program 8 means that the debugger 14 communicates with the debug function 7 via the debugger-use switching driver 15, the debug function 7 performs debugging on the protected program 8, including acquisition of debug information, setting of break points, acquisition and setting of register values and memory values, etc., and the debugger 14 receives the results of the debugging.

In the following explanations, the debugger 14 attaches to the normal program 12 that runs in the normal mode, and performs the debugging on the attached normal program (e.g. the normal program 12a) and the protected program (e.g. the protected program 8a) that cooperates with the normal program.

Note that although the debugger 14 of the first embedment 1 is an application debugger that operates on the normal OS 11, the debugger is not limited to this. For example, the debugger may be a kernel mode debugger such as the KGDB used in the Linux (TM), and the debugging of a device driver that operates on the normal mode and the protection mode may be allowed.

### 1.2 Detailed explanations of debug function 7

The following describes the details of the debug function 7 explained in "1.14 debug function 7" above.

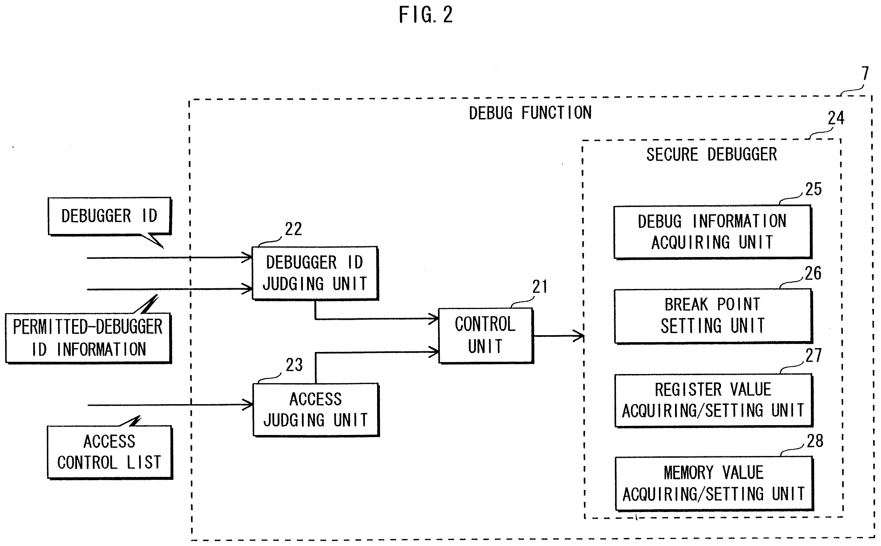

FIG. 2 is a block diagram showing the details of the debug function 7. The debug function 7 includes a control unit 21, a debugger ID judging unit 22, the access judging unit 23, and a secure debugger 24. The secure debugger 24 includes a debug information acquiring unit 25, a break point setting unit 26, a register value acquiring/setting unit 27, and a memory value acquiring/setting unit 28.

As described in "1.1. 5 Protected program 8" above, the protected program 8 includes the permitted-debugger ID information 52 and the access control list 53. Also, as described in "1.1.10 Debugger 14", the debugger 14 has a debugger ID.

In the following explanations of the debug function 7, protected programs that are to be debugged are not specified, and collectively referred to as the protected program 8 as the target of the debugging.

### 1.2.1 Debugger ID judging unit 22

In FIG. 2, the debugger ID judging unit 22 judges whether the debugger 14 is permitted to debug the protected program 8 as the target of the debugging.

In other words, the debugger ID judging unit 22 acquires the debugger ID of the debugger 14 and the permitted-debugger ID information 52 included in the protected program 8 as the target of the debugging, and compares the debugger ID and the permitted-debugger ID information 52. According to the result of the comparison, the debugger ID judgment unit 22 judges whether the debugger 14 is permitted to debug the protected program 8 as the target of the debugging (i.e. whether the debugger 14 is permitted to debug the protected program as the target of the debugging).

### 1.2.1.1 Detailed explanation of debugger ID judging unit 22

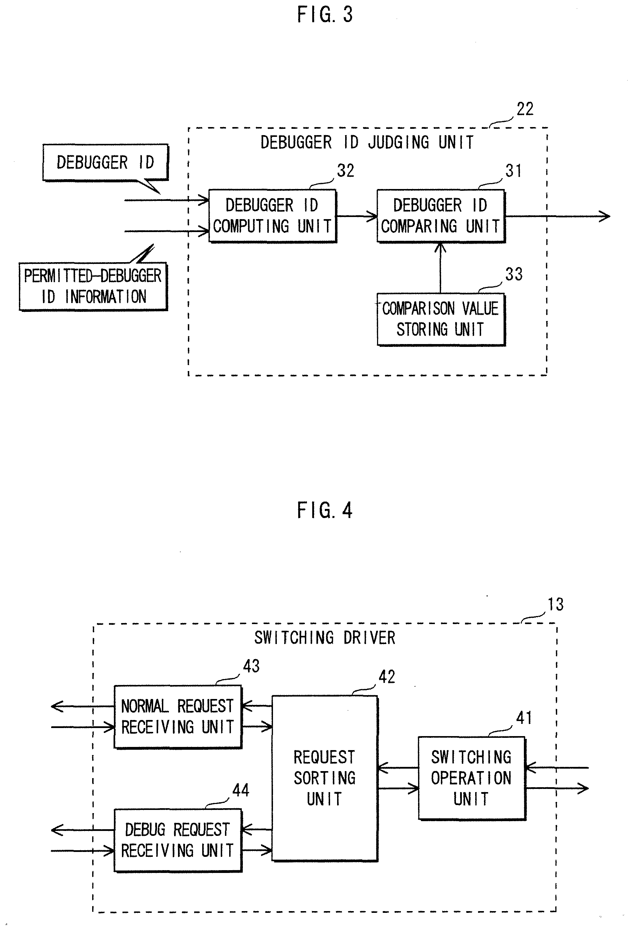

FIG. 3 is a block diagram showing the details of the debugging ID judging unit 22.

As FIG. 3 shows, the debugger ID judging unit 22 includes a debugger ID comparing unit 31, a debugger ID computing unit 32, and a comparison value storing unit 33. The debugging ID judging unit 22 judges whether the debugger ID of the debugger 14 and the value indicated by the permitted-debugger ID information 52 included in the protected program 8 that as the target of the debugging is the same or not.

More specifically, as FIG. 3 shows, the debugger ID computing unit 32 receives the debugger ID of the debugger 14 and the permitted-debugger ID information included in the protected program 8 as the target of the debugging. The debugger ID computing unit 32 subtracts the value indicated by the permitted-debugger ID information 52 from the debugger ID. The debugger ID computing unit 32 outputs the subtraction result, as the computing result, to the debugger ID comparing unit 31.

The debugger ID comparing unit 31 compares the computing result of the debugger ID computing unit 32 with the comparison value stored in the comparison value storing unit 33. If they are the same, the debugger ID comparing unit 31 notifies the control unit 21 of that "the debugging is allowed", and if they are not the same, the debugger ID comparing unit 31 notifies the control unit 21 of that "the debugging is not allowed". Here, the comparison value storing unit 33 stores a value "0" as the comparison value for comparison with the computing result of the debugger ID computing unit 32.

1.2.1.2 Supplementary explanations of the debugger ID judging unit 22

In this first embodiment, the debugger ID judging unit 22 judges whether the debugger ID of the debugger 14 and the value indicated by the permitted-debugger ID information 52 included in the protected program 8 as the target of the debugging is the same or not. However, it is not essential that the debugger ID judging unit 22 judges the sameness of the debugger ID. The debugger ID computing unit 32 judges may perform multiplication or encryption/decryption computing instead of the subtraction. Also, the comparison value storing unit 33 may store a value other than the value "0".

In a word, the debugger ID judging unit 22 performs prescribed computations using, as operators, the identifier of the debugger 14 and a verification value included in the protected program as the target of the debugging, and if the result of the computations is the same as the comparison value stored in the comparison value storing unit 33, the debugger ID judging unit 22 judges that "the debugging is allowed", and if not, the debugger ID comparing unit 31judges that "the debugging is not allowed".

In addition, the debugger ID storing unit, which is not illustrated, may have store the value indicated by the permitted-debugger ID information 52 of the protected program 8 in advance, and the debugger ID judging unit 22 may compare the debugger ID of the debugger 14 received from the debugger 14 with the value stored in the debugger ID storing unit. If this is the case, the debugger ID computation unit 32 does not perform any special computations.

### 1.2.2 Access judging unit 23

The following explains the access judging unit 23 with reference to FIG. 2 again.

When the debugger 14 requests an access to a prescribed area of the protected program 8 as the target of the debugging, the access judging unit 23 judges whether the access is permitted.

Specifically, the access judging unit 23 receives the access control list 53 from the protected program 8 as the target of the debugging, and judges whether the access to the area is permitted or not according to the received access control list 53.

### 1.2.2.1 Detailed explanations of access control list 53

The following explains the details of the access control list 53.

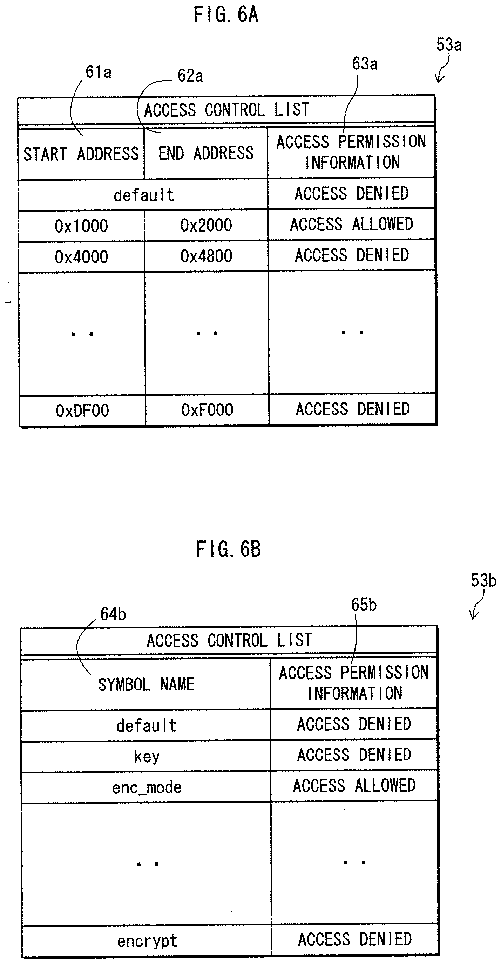

FIGs. 6A and 6B show examples of the data structure of the access control list 53 acquired by an access judging unit 23.

The access control list 53 includes two types of information. One of the types is area information for controlling accesses, and the other is access permission information relating to the area information. The following explains an access control list 53a for controlling accesses based on memory addresses and an access control list 53b for controlling accesses based on symbols . Note that symbols are, specifically, variables, functions, and the likes included in programs.

### 1.2.2.2 Access control based on memory addresses

FIG. 6A shows the data structure of the access control list 53a for specifying the areas, where accesses are controlled, by memory addresses. Each area where accesses are controlled is specified by a start address and an end address.

As FIG. 6A shows, each record of the access control list 53a includes a start address 61a, an end address 62a and access permission information 63a.

The start address 61a and the end address 62a respectively indicate the start address and the end address of a memory area where accesses are controlled.

The access permission information 63a shows whether to permit accesses to the memory area indicated by the start address 61a and the end address 62a. When permitting accesses, the access permission information 63a shows "access allowed", and when not permitting accesses, the access permission information 63a shows "access denied", using one-bit information, for example. The access control list 53a includes a plurality of records.

Note that the top of the list, an area which is not specified by the start address 61a and the end address 62a is defined as "default". Accesses to the "default" area in this embodiment are prohibited as "access denied".

Also note that the addresses indicated by the start address 61a and soon in this embodiment are relative addresses . Specifically, the decryption-use header information 54 of the protected program 8 shows a memory address used for loading the protected program 8 into the memory, and relative addresses with reference to this address, which is assumed as "0", are indicated by the start address 61a and so on. As a matter of course, the addresses indicated by the start address 61a may be absolute addresses of the memory.

### 1.2.2.3 Operations for access control based on memory addresses

The access judging unit 23 acquires the access control list 53a and the debug information of the protected program 8a. Also, using the debug information of the protected program 8a, the access judging unit 23 converts a symbol, accesses to which is requested by the debugger 14, to an address.

The access judging unit 23 judges whether each memory area indicated by the start address 61a and the end address 62a of the access control list 53a includes the address as the conversion result, in the top-to-bottom order of the access control list 53a. If judging affirmatively, the access judging unit 23 acquires the access permission information 63a associated with the corresponding area, and notifies the control unit 21 of the information indicated by the access permission information 63a, namely either the "access allowed" or the "access denied". If any memory area does not include the address, the access judging unit 23 notifies the control unit 21 of the either the "access allowed" or the "access denied", based on the access permission information 63a associated with the "default" at the top of the list.

### 1.1.2.4. Access control based on symbols

FIG. 6B is the data structure of the access control list 53b for indicating areas to be access-controlled by symbol names.

As FIG. 6B shows, each record of the access control list 53b includes a symbol name 64b and access permission information 65b.

The symbol name 64b shows the name of a symbol as the target of the access control.

The access permission information 65b shows whether to permit accesses to the symbol indicated by the symbol name 64b.

As FIG. 6B shows, the access control list 53b shows, for each symbol, whether to permit accesses to the symbol. In FIG. 6B, "access allowed" means that the access is permitted, and "access denied" means that the access is prohibited.

Note that symbols that are not indicated by the symbol name 64b are defined as "default". In this embodiment, accesses to the "default" symbols are prohibited as "access denied".

### 1.2.2.5 Operations for access control based on symbols

The access judging unit 23 acquires the access control list 53b. The access judging unit 23 judges whether the name of the symbol, accesses to which is requested by the debugger 14, is the same as the symbol name indicated by the symbol name 64b in the top-to-bottom order of the access control list 53b. If they are the same, the access judging unit 23 acquires the access permission information 65b that is associated with the symbol name, and notifies the control unit 21 of the information indicated by the access permission information 65b, namely either "access allowed" or "access denied". If they are not the same, the access judging unit 23 notifies the control unit 21 of either the "access allowed" or "access denied" based on the access permission information 65b associated with the "default" at the top of the list.

1.2.2.6 Supplementary explanations

In the first embodiment, it is assumed that the access control lists 53a and 53b respectively contain the access permission information 63a and the access permission information 65b in association with the "default" symbol at the top of the list. However, the present invention is not limited to this.

In the case where a memory area or a symbol name is not included in the access control list 53a and 53b, it may be always regarded as "access allowed", or alternatively, it may be always regarded as "access denied".

Also, although the debugger 14 in this embodiment makes an access request using the symbols, the present invention is not limited to this. For example, the debugger 14 may use memory addresses to specify an areas to be accessed.

In the example above, the symbol specified by the debugger 14 is once converted to an address for judging the access permission according to the access control list 53a. However, if the debugger 14 uses the memory addresses, the access permission can be directly judged according to the addresses specified by the debugger 14.

### 1.2.3 Secure debugger 24

The secure debugger 24 performs various types of debugging according to requests from the debugger 14.

The secure debugger 24 includes a debug information acquiring unit 25, a break point setting unit 26, a register value acquiring/setting unit 27 and a memory value acquiring/setting unit 28.

For the debugging, the debug information acquiring unit 25 acquires debug information such as the symbol information from the protected program 8 as the target of the debugging.

The break point setting unit 26 sets a break point to the protected program 8 as the target of the debugging.

The register value acquiring/setting unit 27 acquires a register value that is being used by the protected program 8 as the target of the debugging, or setting a register value to be used by the protected program 8 as the target of the debugging.

The memory value acquiring/setting unit 28 acquires a memory value that is being used by the protected program 8 as the target of the debugging, or setting a memory value to be used by the protected program 8 as the target of the debugging.

### 1.2.4 Control unit 21

The control unit 21 checks whether the debugger 14 is permitted to execute the debugging of the protected program as the target of the debugging, based on the judgment result by the debugger ID judging unit 22 and the access judging unit 23.

As a result of the checking, if the execution of the debugging is permitted, the control unit 21 calls each of the facilities included in the secure debugger 24 (i.e. the debug information acquiring unit 25, the break point setting unit 26, the register value acquiring/setting unit 27, and the memory value acquiring/setting unit 28) in accordance with requests from the debugger 14.

If the debugger ID judging unit 22 judges that the debugger 14 is not permitted to execute the debugging of the protected program 8 as the target of the debugging, or the access judging unit 23 judges that the debugger 14 is not permitted to access the area, the control unit 21 does not process the request from the debugger 14. In other words, the control unit 21 does not call each of the facilities included in the secure debugger 24. Here, to notify the debugger 14 of not having called each of the facilities included in the secure debugger 24, the control unit 21 may output to the debugger 14 a debugging impossibility notification, which shows that the execution of the debugging has not been permitted. As a result, the debugger 14 can inform the user of the debugger 14 of that the execution of the debugging has not been permitted.

As described above, the execution of the debugging is controlled with use of the permitted-debugger ID information 52 and the access control list 53. However, not that one or more debugger IDs may be indicated by the permitted-debugger ID information 52 included in the protected program 8. If a plurality of debugger IDs are included, it is possible to allow a plurality of developers to execute the debugging. For example, this may be applied in the case a plurality of developers co-develop a program.

Also, a plurality of pairs of the debugger ID information 52 and the access control list 53 in association with each other may be included in the protected program 8.

As a matter of course, a plurality of pieces of the permitted-debugger ID information 52 each including a single debugger ID may be included in the protected program, and the access control list 53 may be associated with each piece of the permitted-debugger Id information 52. If this is the case, the access control list 53 may show different access restriction for each piece of the permitted-debugger ID information 52. As a result it is possible to apply different access restriction to each debugger ID.

The control unit 21 instructs the debugger ID judging unit 22 to perform the judgment as to each of the debugger IDs indicated by the plurality of the permitted-debugger ID information 52. If there is any debugger ID judged to be permitted to perform the debugging, the control unit 21 requests the access judging unit 23 to perform the access judgment according to the access control list corresponding to the permitted-debugger ID. If all the debugger IDs are judged to be prohibited to perform the debugging, the control unit 21 does not process the request from the debugger 14.

### 1.3 Detailed explanations of switching driver 13

The following describes the switching driver 13 mentioned in "1.1.7 Switching driver 13".

Fig. 4 is a block diagram showing the switching driver 13. The switching driver 13 includes a switching operation unit 41, a request sorting unit 42, a normal request receiving unit 43, and a debug request receiving unit 44.

### 1.3.1 Switching operation unit 41

The switching unit 41 saves the status of the data processing apparatus in the normal mode by storing the register value and so on used in the normal mode, and then switches from the normal mode to the protection mode, using the switching mechanism 3.

Moreover, when the mode is switched from the protection mode to the normal mode, the switching unit 41 restores the status that has been saved, and notifies the request sorting unit 42 of a request from the protection mode generated at the switching. This request is, specifically, a debug request duet to debug exceptions, and a request to the normal program, for example.

### 1.3.2 Request sorting unit 42

The request sorting unit 42 judges whether the request from the protection mode is the debug request due to the debug exception caused during the protection mode operation or the request to the normal program 12.

As a result of the judgment, if the request is the debug request, the request sorting unit 42 notifies the debug request receiving unit 44 of the debug request. If the request is to the normal program 12, the request sorting unit 42 notifies the normal request receiving unit 43 of the request from the protection mode.

### 1.3.3 Normal request receiving unit 43

The normal request receiving unit 43 mediates communications between the normal program 12 and programs running in the protection mode, such as the protected OS 6 and the protected program 8.

In other words, the normal request receiving unit 43 notifies the normal program 12 of the request from the program running in the protection mode or, to the contrary, notifies the program running in the protection mode of the request from the normal program 12.

### 1.3.4 Debug request receiving unit 44

The debug request receiving unit 44 notifies the debugger 14, which debugs the normal program 12 that is running in cooperation with the protected program 8, of a debug exception caused by the break point that has been set in the protected program 8.

With the stated structure, the switching driver 13 can notifies the appropriate debugger 14 of the debug exception caused in the protected program 8, while mediating communications between the normal program 12 and the protected program 8. With this structure, it is possible to prevent leakage of secret information included in the protected program 8 to irrelevant debuggers.

### 1.3.5 Supplementary explanations of the switching driver 13

In the first embodiment, the switching driver 14 includes the request sorting unit 42, the normal request receiving unit 43, and the debug request receiving unit 44 as well as the switching operation unit 41. However, the structure of the present invention is not limited to this. The switching driver 14 may include only the switching operation unit 41, and the request sorting unit 42, the normal request receiving unit 43 and the debug request receiving unit 44 may be included in the normal program 12 in the form of a library. If this is the case, the functions of the request sorting unit 42, the normal request receiving unit 43 and the debug request receiving unit 44 are performed by the library that is called during execution of the normal program 12.

### 1.4 Operations

The following explains operations performed by the data processing apparatus 1.

In the following explanation, firstly, "1.4.1 Operations of the debug function 7" explains the operations of the debug function 7, which characterizes the present invention.

Next, as the overall operations, "1.4.2 Operations in the case of not performing debugging" explains the operations in the case of not performing debugging. In this section, cooperation between the normal program 12 and the protected program 8 is explained.

After that, "1.4.3 Preprocessing for debugging" and "1.4.4 Debugging" explain operations performed by the debugger 14 to debug the normal program 12 and the protected program 8, together with preprocessing for the debugging.

Here, note that programs and debuggers that run in the normal mode can not directly access the protected program, because the protected program 8 is a program that runs in the protection mode. Therefore, the secure debugger 24 debugs the protected program 8, and the debugger 14 receives the result of the debugging.

### 1.4.1 Operations of the debug function 7

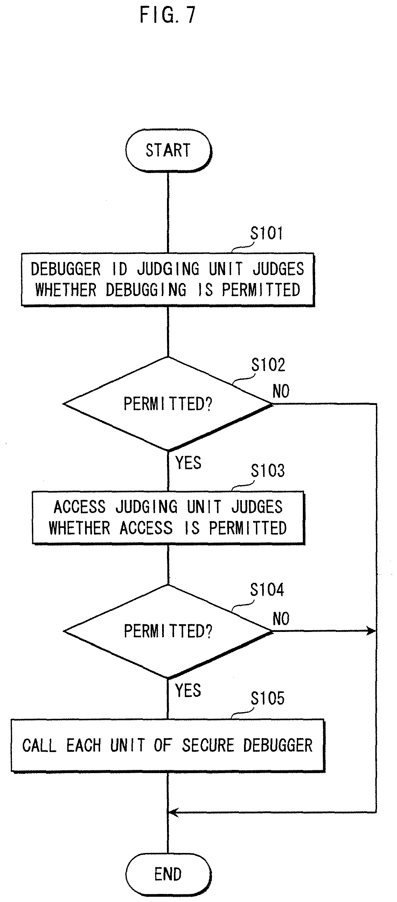

FIG. 7 shows operations performed by the debug function 7.

The debugger ID judging unit 22 judges whether the debugger 14 is permitted to debug the protected program 8, based on the debugger ID of the debugger 14 and the permitted-debugger ID information 52 of the protected program 8 (S101).

The control unit 21 switches operations based on the result of the judgment by the debugger ID judging unit 22. In other words, if the judgment result is the "debugging prohibited" (S102: NO), the control unit 21 cancels the debugging.

If the judgment result is the "debugging permitted" (S102: YES), the access judging unit 23 judges whether the debugger 14 is permitted to access the area of the protected program where the debugger 14 is attempting to access, based on the access control list 53 of the protected program 8 (S103).

The control unit 21 switches processing based on the judgment result of the access judging unit 23 (S104) . In other words, if the judgment result is the "debugging prohibited" (S104 : NO), the control unit 21 cancels the debugging.

If the judgment result is the "debugging permitted" (S104: YES), the debug function 7 calls each of the units of the secure debugger 24 (i.e. the debugging information acquiring unit 25, the break point setting unit 26, the register value acquiring/setting unit 27 and memory value acquiring/setting unit 28) to have them perform their respective functions (S105).

### 1.4.2 Operations in the case of not performing debugging

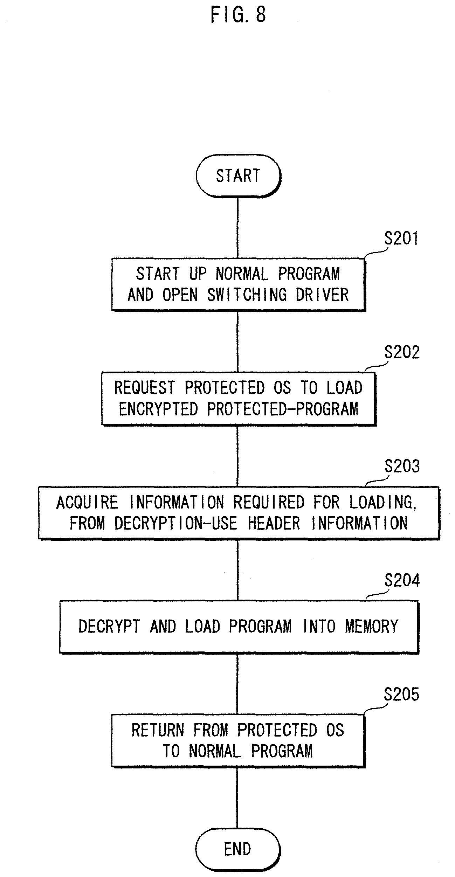

FIG. 8 shows is a flowchart pertaining to the first embodiment, showing execution of the normal program 12 and the protected program 8 where debugging is not performed.

### 1.4.2.1 Loading of the protected program 8

Firstly, the following describes loading of the protected program 8. In the following explanation, it is assumed that the normal program 12 and the protected program 8 cooperate with each other. The normal program 12 calls the protected program 8, via the switching driver 13 as the device driver of the normal OS 11 and the protected OS 6. In the following explanation, it is assumed that the normal program 12a cooperate with the protected program 8a. The same applies to the case where the normal program 12b operates or where the protected program 8b cooperates.

As FIG. 8 shows, firstly the normal program 12a is started up. Upon started up, the normal program 12a *opens* the switching driver 13 as preprocessing for switching the operation mode to the protection mode (Step S201) . Here, to open means to enable the switching driver 14 to communicate with processes that run in the protection mode, such as the protected OS 6.

To run the protected program 8a, the normal program 12a specifies an encrypted protected-program, and sends a request to the protected OS 6 via the switching driver 14 to load the encrypted protected-program into the memory (Step S202) . Here, it is assumed that the protected program8a is generated by decrypting the encryptedprotected-program.

The protected OS 6 receives the request to load the encrypted protected-program, and acquires information required for the loading from the decryption-use header information of the encrypted protected-program (Step S203). The information, required for the loading includes, for example, information required for decrypting the encrypted protected-program, such as a load destination address of the body of the protected program, included in the encrypted protected-program.

The protected OS 6 decrypted the encrypted protected-program based on the acquired information required for the loading. The protected OS 6 loads the protected program 8a acquired by the decryption into the memory area that is managed in the protection mode (Step S204) to enable execution of the protected program 8a.

When the protected program 8a comes into an executable state, the processing returns from the protected OS 6 to the normal program 12a via the switching driver 13 (Step S205). In other words, the protected OS 6 hands the execution right of the processes to the normal program 12a, and the normal program 12a runs again.

### 1.4.2.2 Execution of the protected program 8

The following describes a case where the normal program 12, running in the normal OS 11, requires execution of the functions of the protected program 8a.

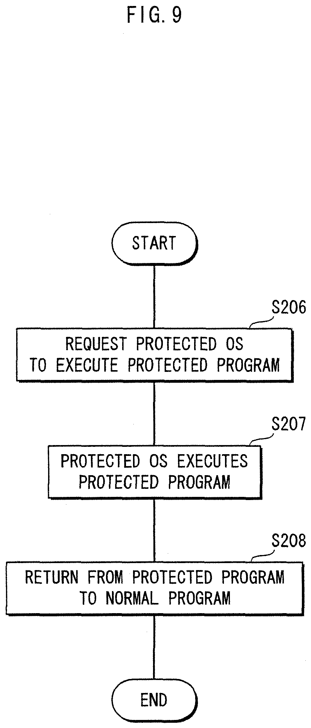

FIG. 9 is a flowchart showing operations of the normal program 12 where the normal program 12 requires execution of the functions of the protected program 8.

Here, note that in the explanations of the processing shown in FIG. 9, it is assumed that the processing shown in FIG. 8 has been completed, and the protected program 8 is ready to be executed.

The normal program 12a sends a request to execute the protected program 8a to the protected OS 6 via the normal program 12a (Step S206). The request shows instructions and processing that are to be executed by the protected program 8a.

The OS 6 receives the request to execute the protected program 8a, executes the protected program 8a, and performs processing according to the execution request (Step S207).

Upon completing the execution of the protected program 8a, processing returns from the protected program 8a to the normal program 12a, via the protected OS 6 and the switching driver 13 (Step S208) . If the normal program 12a uses the processing result of the protected program 8, the protected program 8a and the normal program 12a hands the processing results to each other via the switching mechanism 3 and the switching driver 13.

Every time execution of the functions of the protected program 8a is required, the Steps S206 to S208 described above are performed.

### 1.4.2.3 Completion of use of the protected program 8

The following describes the operations of the normal program 12a completing the use of the protected program 8a.

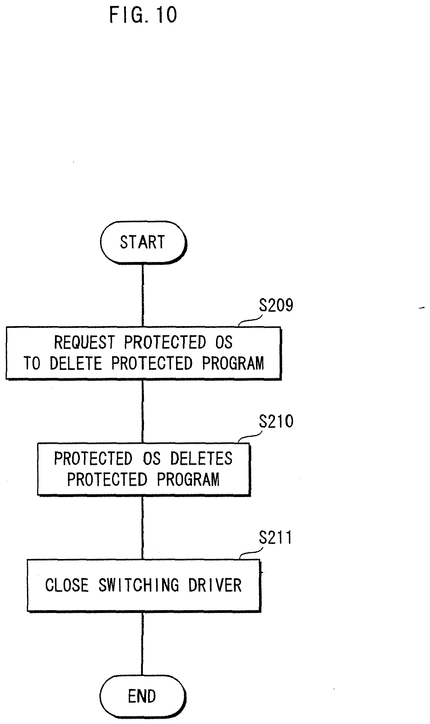

FIG. 10 is a flowchart showing operations of the normal program 12a completing the use of the protected program 8a.

As FIG. 10 shows, upon completion of the use of the protected program 8a, the normal program 12a output a request for deleting the protected program 8a to the protected OS 6 via the switching driver 13 (Step S209) . Note that the request for deletion indicates a protected program 8 to be deleted. In this embodiment, the protected program 8a is deleted from the memory according to the request.

Upon receiving the request for deletion, the protected OS 8 deletes the protected program 8a from the memory (Step S210) . After that, the processing returns from the protected OS 6 to the normal program 12a via the switching driver 13. As a result of this operation, the functions of the protected program 8a are disabled until when the protected program 8a is loaded again. Also, the protected program 8a in plain text is deleted from the memory. This protects the data processing apparatus against unauthorized tampering.

After that, when it becomes unnecessary for the normal program 12a to operate in the protection mode, the switching driver 13 is *closed* (S211) . Here, to *close* means to disable the switching driver 13 to perform communications with the protected OS 6 and so on.

### 1.4.3 Preprocessing for debugging

Next, the following describes operations performed by the debugger 14 to debug the normal program 1w and the protected program 8. Firstly, the preprocessing for the debugging is explained.

### 1.4.3.1 Preprocessing

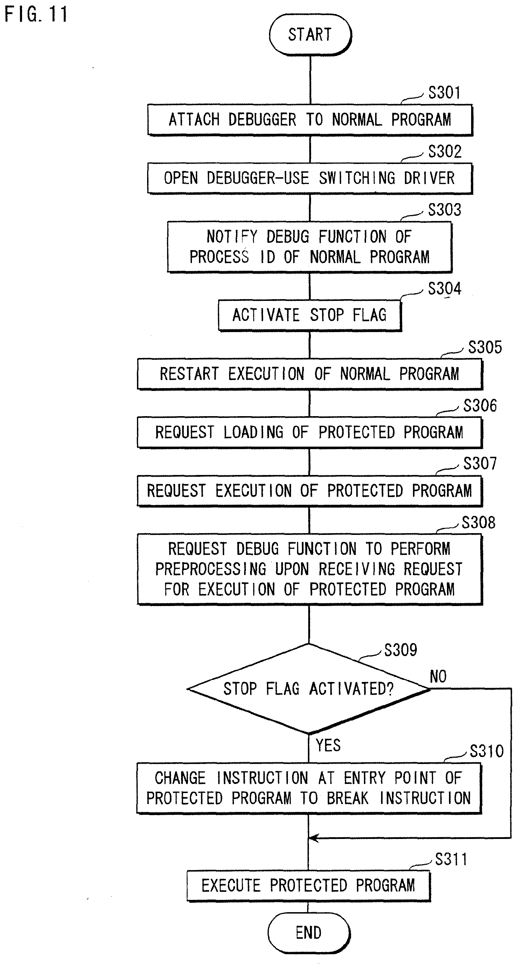

FIG. 11 shows is a flowchart showing preprocessing procedures performed by the debugger 14 to debug the normal program 12 and the protected program 8.

In the following operations, the normal program 12a and the protected program 8a cooperate with each other, and the debugger 14 debugs the normal program 12a and the protected program 8a.

According to an instruction for attachment received from the program developer, the debugger 14 is attached to the normal program 12a for debugging the normal program 12a (S301).

The debugger 14 *opens* the debugger-use switching deriver 15, to communicate with the debug function 7 operating in the protection mode while performing the debugging (S302).

The debugger 14 notifies the debug function 7, operating in the protection mode, of the process ID of the normal program 12a via the debugger-use switching driver 15 (Step S303).

The debug function 7 stores the notified process ID, and when starting execution of the protected program 8a, activates the stop flag which shows whether to stop the protected program immediately after the execution start of the protected program 8a (Step S304) . The reason for activating the stop flag is described later in "1.4.3.2 Supplementary explanations of preprocessing". The sop flag is one-bit information, and stored in the storage area within the protection mechanism, such as the register and the memory.

The debugger 14 debugs the normal program 12a upon receiving an instruction pertaining to debugging from the program developer. Upon completion of required processing, the debugger 14 receives an instruction to restart the execution of the program, and accordingly restarts the execution of the normal program 12a as the debugging target (S305).

The restarted normal program 12a *opens* the switching driver 13, and requests the protected OS 6 to load the protected program 8a (S306) and execute the protected program 8a (S307), via the switching driver 13.

Note that the loading performed in Step S306 is almost the same as that performed in Steps S202, S203 and S204 in FIG. 7. Also, the execution performed in Step S307 is almost the same as that performed in Steps S206, S207 and S208 in FIG. 8. The difference is that the process ID of the normal program 12a is notified to the debug function 7 together with data handed between the processes (S303) because when the debugger 7 is operating, the debugger function 7 judges whether the normal program 12a is being debugged.

Also, upon receiving a request for executing the protected program 8a, the protected OS 6 request the debug function 7 to perform the preprocessing (S308) . The debug function 7 receives the request, and performs the preprocessing. Here, the preprocessing means that the debug function 7 judges whether the stop flag corresponding to the process ID is active or not (S309), and if active (S309: YES), changes an instruction located at the entry point of the protected program 8a to a break instruction (S310) . If the stop flag is not active (S309: NO), the debug function 7 does not change the instruction at the entry point.

The protected OS6 executes the protected program 8a (S311).

### 1.4.3.2 Supplementary explanations of preprocessing

In the operations described above, the stop flag is activated in Step S304. This is for, in a word, allowing the program developer to easily debug the program.

The following explains the reason for such operations: In the first embodiment, as described in the explanations of the operations in the case of not performing the debugging, the protected program 8a is loaded when called by the normal program 12a, and deleted when it becomes unnecessary. Here, since the program of the first embodiment usually begins with the execution of the normal program 12a, it is difficult for the program developer to recognize that the processing is switched to the execution of the protected program 8a.

Also, since the debugger 14 of the first embodiment is usually attached to the normal program, the program developer can not directly set a break point to the protected program 8a, and it is difficult to debug the protected program 8a.

Accordingly, the processing is stopped when the protected program 8a is read, so that the program developer is notified of that the processing is moved to the protected program 8a and given an opportunity to set the break point to the protected program 8a.

### 1.4.4 Debugging

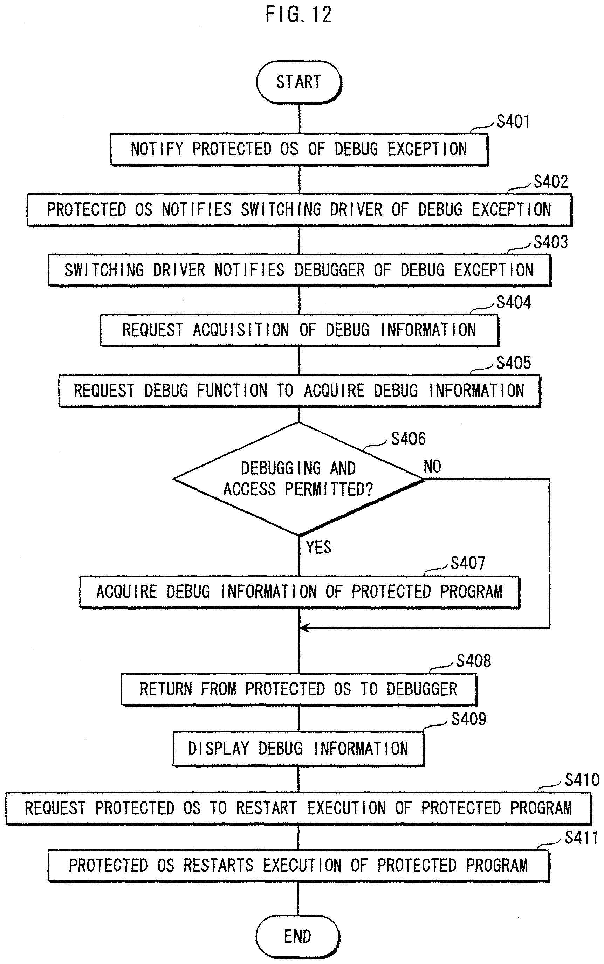

FIG. 12 is a flowchart showing debugging of the protected program 8a using the debugger 14 when a debug exception has caused due to a break point during the execution of the protected program 8a.

### 1.4.4.1 Debugging

As FIG. 12 shows, if a debug exception is caused due to a break point that has been set to the protected program 8 during the execution of the protected program 8a, the protected OS 8 is notified of the debug exception (S401)..

Upon receiving the notification of the debug exception, the protected OS 6 notifies the switching driver 14 of the occurrence of the debug exception (S402).

Upon receiving the notification of the occurrence of the debug exception, the switching driver 13 requests the debugger 14 to execute the debugging by the debug request receiving unit 44 (S403).

Upon receiving the request for executing the debugging, the debugger 14 requests the protected OS 6 via the debugger-use switching driver 15 to acquire the debug information, in order to provide the program developer with the debug information (S404). At this moment, the debugger 14 also requests the protected OS 6 to provide the debugger ID of the debugger 14 and a communication area for the debugging, which is not illustrated. Here, the area for the debugging use is accessible in both the normal mode and the protected mode, and used for handing the debug information from the protected mode to the normal mode.

The protected OS 6 request the debug function 7 to acquire the debug information (S405).

The debug function 7 judges whether the debugging of the protected program 8a and accesses to a prescribed part of the protected program 8a pertaining to the debugging are permitted, by the debugger ID judging unit 22 and the access judging unit 23 (S406).

In Step S406, if it is judged that the debugging and the accesses are permitted (S406: YES), the debug information acquiring unit 25 acquires the debug information of the protected program 8a, and copy the debug information to the communication area for the debugging use (S407). After the copying, the debug function 7 notifies the debugger 14 of the completion of the acquisition of the debugging information, via the protected OS 6 and the debugger-use switching driver 15, and then the processing returns from the debug function 7 to the debugger 14 (S408).

The debugger 14 acquires the debug information copied to the communication area for the debugging use, and display on a display unit which is not illustrated, in order to show the debug information to the program developer (S409).

After that, upon completion of necessary operations by the program developer referring to the debug information, the debugger 14 receives a prescribed instruction from the program developer, and request the protected OS 6 via the switching driver 14 to restart the execution of the protected program 8a as the debug target (S410) .

Receiving the request, the protected OS 6 restarts the execution of the protected program 8a (S411).

If a debug exception occurs again afterward, the processing is performed in the same flow as described above.

### 1.4.4.2 Supplementary explanations of the debugging

The explanation above explains a case where a debug exception due to a break point occurs during the execution of the protected program 8a. In addition, there are various patterns of debugging with use of the debug function 7. Specifically, the program developer requests other types of debugging, such as setting of break points and setting and acquisition of register values and memory values, and the debug function performs debugging according to the request. In such cases, the debug function 7 (To be exact, each function unit of the secure debugger 24) performs processing by following the same flow. Accordingly, explanations of these cases are omitted here.

According to the first embodiment, it is assumed that when a debug exception occurs, debugging of the protected program 8a pertaining to the debug exception can be performed. However, this is not limited to the protected program 8. The debugging may be performed on a normal program such as the normal program 12a, being debugged by the debugger 14.

### 2. The second embodiment

The following explains the second embodiment of the present - invention. This section particularly explains a generation method of the protected program 8 and a program generation apparatus for generating the protected program 8.

### 2.1 Outline of program generation method

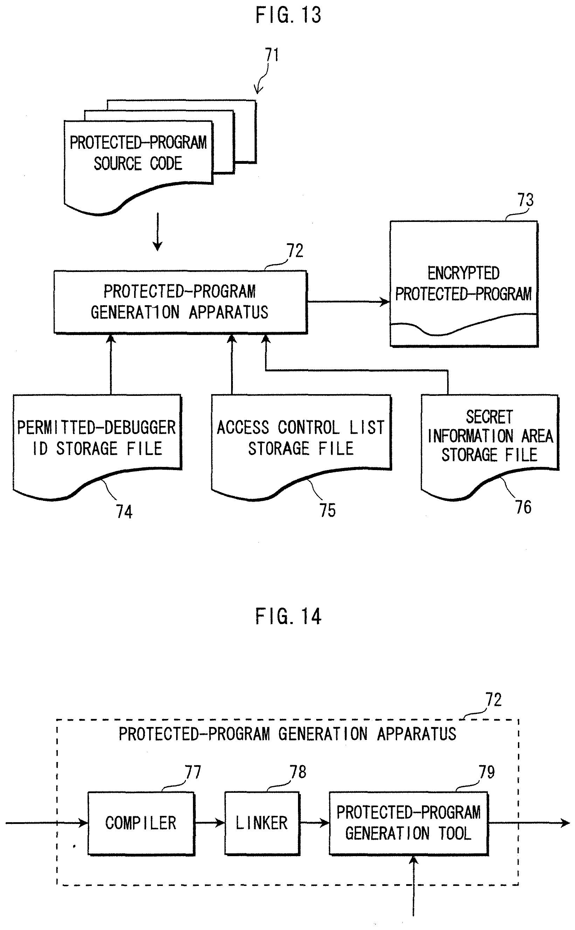

FIG. 13 shows a method for generating the protected program 8 pertaining to the present invention.

The protected program 8 is generated by encryption. A protected-program source code 71, a protected-program generation apparatus 72, a permitted-debugger ID storage file 74, an access control list storage file 75, and a secret information area storage file 76 are used for generation of the encrypted protected-program 73. The permitted-debugger ID storage file 74 and the access control list storage file 75 are data to be added to the protected program.

The protected-program source code 71 shown in FIG. 13 is a source code describing operations of the protected program 8.

The protected-program generation apparatus 72 performs compilation and linkage of the protected-program source code 71. The protected-program generation apparatus 72 also adds the permitted-debugger ID information and the access control list to the generated executable file, and encrypts the file. Further, the protected-program generation apparatus 72 adds information required for decryption, as decryption-use header information, to the encrypted file, thereby generating the encrypted protected-program 73. More specific explanation is given later.

The encrypted protected-program 73 is a program generated by the protected-program generation apparatus 72.

The permitted-debugger ID storage file 73 and the access control list storage file 75 include the permitted-debugger ID information and the access control list respectively, which are used by the debug function 7 and the debugger 14 to debug the protected program 8.

The secret information area storage file 76 indicates areas for pieces of information included in the program and secret information classifications. Each information classification shows whether the information relating to the corresponding area is secret information or not.

The developer of the protected program creates the protected-program source code 71. The developer also creates an access control list showing areas where the debugger is to be permitted to acces.s and areas where the debugger is not to be permitted to access. The developer describes this list in the access control list storage file 75. Also, the developer describes in the secret information area storage file 76, areas for secret information and areas not for secret information. The developer acquires the permitted-debugger ID storage file 74 separately. The developer operates the protected-program generation apparatus 72 with inputting the permitted-debugger ID storage file 74, the protected-program source code 71, the access control list storage file 75 and the secret information area storage file 76. As a result, the encrypted protected-program 73 is generated.

### 2.2 Structure of protected-program generation apparatus 72

FIG. 14 shows the structure of the protected-program generation apparatus 72.

The protected-program generation apparatus 72 includes a compiler 77, a linker 78, and a protected-program generation tool 79.

### 2.2.1 Compiler 77

The compiler 77 illustrated in FIG. 14 compiles the protected-program source code 71 that has been input, to generate an object file. The compiler 77 generates symbol information, showing locations of variables and functions, and debug information, showing correspondence between the source codes and the program codes included in the object file, and adds the information to the object file.

### 2.2.2 linker 78

The linker 78 links the object file generated by the compiler 77 with the library, to generate an executable file. Furthermore, the linker 78 generates a symbol file which shows locations of variables and functions included in the executable file.

### 2.2.3 protected-program generation tool 79

The protected-program generation tool 79 adds the permitted-debugger ID information and the access control list to the header of the executable file generated by the linker 78. The permitted-debugger ID information is stored in the permitted-debugger ID storage file 74 that has been input to the protected-program generation apparatus 72, and the access control list is stored in the access control list storage file 75. Furthermore, the protected-program generation tool 79 adds information showing whether each of the areas described in the secret information area storage file 76 is secret information or not to the debug information, thereby generating the protected program.

The protected-program generation tool 79 encrypts the generated protected program, using a key shared by the protected OS 6 and the protected-program generation apparatus 72, and adds, as the decryption-use header information, information of addresses of loading destinations of the protected program, to the protected program. Here, the encryption is performed with use of the key shared by the protected OS 6 and the protected-program generation apparatus 72 (i.e. the common key cryptosystem). However, as a matter of course, the public key cryptosystem or the like, in which the protected OS 6 and the protected-program generation apparatus 72 hold different keys, may be used instead.

If the access control list is given as pairs of the symbol name and the access permission information, the location of the symbol may be obtained according to the symbol name, with use of the symbol file that has been output by the linker 78, and the symbol name of the access control list may be changed to the location (i.e. information showing the location within the executable file).

The structure of the encrypted protected-program 73 is described above in the first embodiment, with reference to FIG. 5. The encrypted protected-program 73 includes the protected -program body 51, the permitted-debugger ID information 52, the access control list 53, and the decryption-use header information 54. The permitted-debugger ID information 52 and the access control list 53 are added to the header of the protected-program body 51, and encrypted. The decryption-use header information 54 stores therein data required for the decryption. Therefore, the decryption-use header information 54 is not encrypted.

### 2.3 Operations of the protected-program generation apparatus 72

Next, generation of the encrypted protected-program 73 performed by the protected-program generation apparatus 72 is described.

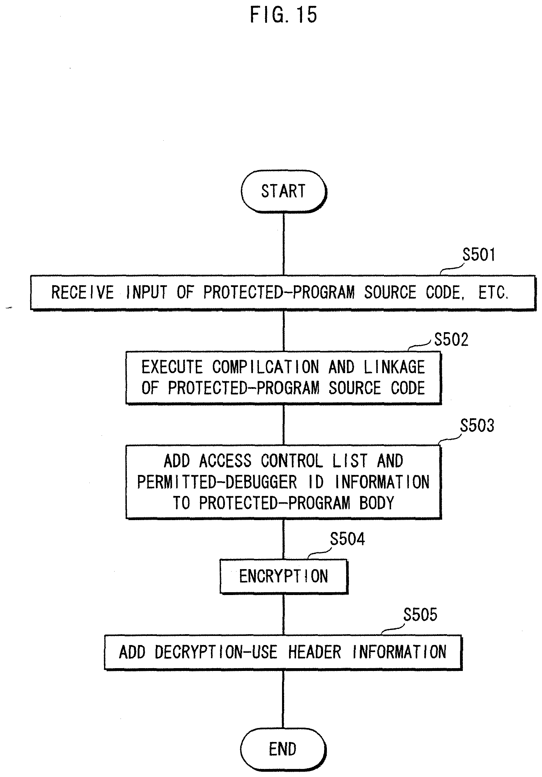

FIG. 15 is a flowchart showing generation of the encrypted protected-program 73 performed by the protected-program generation apparatus 72.

Here, it is assumed that the program developer has already created the protected-program source code 71, the access control list storage file 75, and the secret information area storage file 76. In other words, the program developer describes the protected-program source code 71. Also, the program developer creates the access control list by determining areas that can be accessed by the debugger and that can not be accessed by the debugger, within the source code. The program developer describes the access control list in the form of the access control list storage file 75. Also, the program developer describes the locations of the areas that store secret information, in the secret information area storage file.

It is also assumed here that the program developer has already separately acquired the permitted-debugger ID storage file 74.

The protected-program generation apparatus 72 receives, as the input, the protected-program source code 71, the permitted-debugger ID storage file 74, the access control list storage file 75, and the secret information area storage file 76 (S501).

Using the compiler 77 and the linker 78, the protected-program generation apparatus 72 performs compilation and linkage of the protected-program source code 71 that have been input to the protected-program generation apparatus 72 (S502).

The protected-program generation tool 79 adds the access control list 53 and the permitted-debugger ID information 52 to the protected-program body 51 generated by the compilation and the linking of the protected-program source code 71 (Step S503). The access control list 53 is stored in the access control list storage file 75, and the permitted-debugger ID information 52 is stored in the debugger ID storage file 74. Furthermore, the protected-program generation tool 79 adds information showing whether each of the areas described in the secret information area storage file 76 is secret information or not to the debug information, and performs encryption (S504).

The protected program generation tool 79 adds information required for decryption, such as a load destination address of the protected-program body 51, to the encrypted program, as the decryption-use header information 54, and outputs the resultant program as the encrypted protected-program 73 (S505).

### 2.4 Supplementary explanations of the second embodiment

In the explanations above, it is the program developer that writes information into the secret information area storage file 76. However, the present invention is not limited to this. For example, a computer program, such as the compiler, may automatically create the access control list, the secret information storage file, and so on. More specifically, in the source code, locations of secret information may be marked with some kind of signs in advance, and the compiler may write information into the secret information storage file according to the presence of the signs.

In the explanations above, all the procedures from the compilation of the protected-program source code to the creation of the protected program are performed by the protected-program generation apparatus 72. However, the present invention is not limited to this. For example, the generation of the protected program and the addition of the access control list and so on may be performed by different apparatuses . If this is the case, the protected program generation apparatus 72 may be structured from a pair of an apparatus that performs compilation and linking of the protected-program source code 71 to generate the protected-program body 51 and an apparatus that acquires the generated protected-program body 51 and adds thereto the access control list and so on. With this structure, the apparatus that generates the protected-program body 51 requires, as an input, only the protected-program source code 71.

Also, since the apparatus that adds the access control list and so on is given the protected-program body 51, it is unnecessary to input the protected-program source code 71. With such a structure, it is possible to separately perform the creation of the protected-program body 51 and the addition of the access control list and so on. Accordingly, it is possible to attempt to increase the development efficiency of the program by commissioning the development of the procedures to separate companies or the likes.

### 3. The third embodiment

The following describes the third embodiment of the present invention. In the following explanations, it is assumed that the debugger IDs are managed by a debugger ID management server.

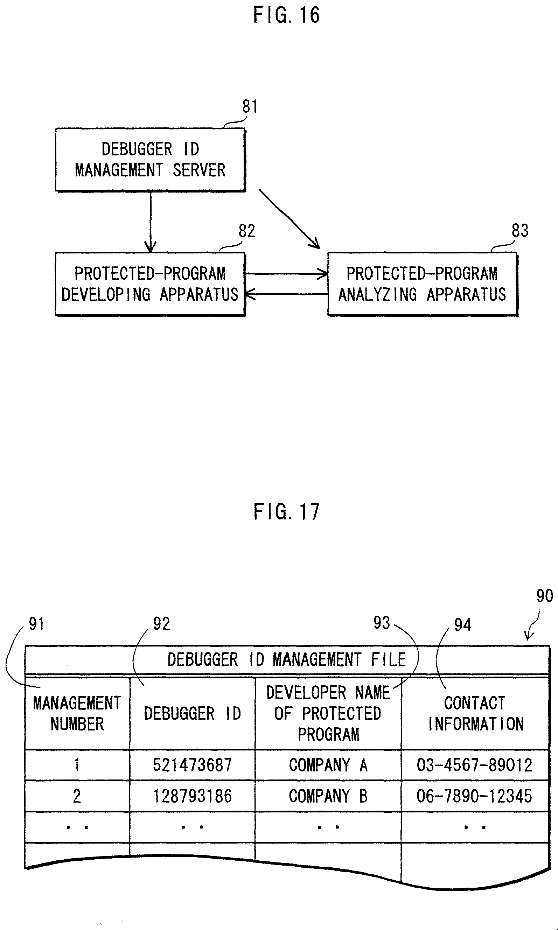

FIG. 16 shows how the debugger ID management server manages the debugger IDs.

### 3.1 Explanation of Structure

### 3.1.1 Debugger ID management server 81

The debugger ID management server 81 illustrated in FIG. 16 manages debugger IDs. The debugger ID management server 81 manages the debugger IDs with use of a debugger ID management file 90, which is described later.

To control whether to permit the debugging according to who the program developer is (or according to the protected-program developing apparatus 82 used by the protected program developer), it is preferable that the debugger ID is different for each protected-program developer (or each protected-program developing apparatus 82). For this reason, the debugger ID management server 81 is required to manage the debugger IDs such that the plurality of protected-program developers (or the protected-program developing apparatuses 82) are not given an identical debugger ID.

The debugger ID management server 81 is a server belonging to a company that manages the debugger IDs (a debugger ID management company) (Here, as a matter of course, the manager who manages the debugger IDs is not limited to a "company". Any organization or individual other than a company may manage the IDs).

According to a request from the protected-program developing apparatus 82, the debugger ID management server 81 issues a debugger ID that is different from a debugger ID issued in the past, and provides the protected program developing apparatus 82 with the debugger ID storage file that stores therein the new debugger ID. Also, the debugger ID management company creates a debugger that has an ID corresponding to the debugger ID, and provides the protected-program developing apparatus 82 with it.

### 3.1.2 Protected-program developing apparatus 82

The protected-program developing apparatus 82 creates the protected program, using the protected-program generation apparatus 72.

Specifically, the protected-program developing apparatus 82 receives the debugger ID storage file from a protected-program analyzing apparatus 83. The protected-program developing apparatus 82 acquires the debugger ID indicated by the received debugger ID storage file, and inputs the debugger ID, as the permitted-ID storage file 74, into the protected-program generation apparatus 72, which is described in the second embodiment. As a result, the protected-program generation apparatus 72 generates the protected-program 8 that allows the debugger, indicated by the acquired debugger ID, to debug the protected-program 8.

Here, note that the protected-program developing apparatus 82 belongs to the program developer (an individual or an organization) that develops the protected program.

### 3.1.3 Protected-program analyzing apparatus 83

The protected-program analyzing apparatus 83 is an apparatus for analyzing errors included in the protected program. The protected-program analyzing apparatus 83 belongs to an individual or an organization.

Specifically, the protected-program analyzing apparatus 83 requests the debugger ID management server 81 to issue the debugger ID and acquires the debugger ID storage file, and provides the protected-program developing apparatus 82, which has developed the protected program to be analyzed, with the acquired debugger ID storage file.

Upon the generation of the protected program by the protected-program developing apparatus 82 according to the received debugger ID storage file, the protected-program analyzing apparatus 83 acquires from the protected-program developing apparatus 82 the protected program that can be debugged, and analyzes the protected program.

### 3.2 Data structure of debugger ID management file 90

FIG. 17 is a data structure of the debugger ID management file 90 used by the management server 81 to manage the debugger IDs.

Each record of the debugger ID management file 90 includes a management number 91, a debugger ID 92, a developer name 93 of the protected program, and contact information 94.

The management number 91 stores a number used by the debugger ID management server 81 to manage the debugger ID that has been issued.

The debugger ID 92 stores a value of the issued debugger ID that is managed according to the management number 91. Note that it is preferable that the debugger ID 92 is a number string having a length that is long enough to identify each program developer (or each protected-program developing apparatus 82) and prevent impersonation attacks which attempt to use the debugger ID to be disguised as the permitted-debugger.

The developer name 93 of the protected program stores the name of the program developer that has been requesting the issuance of the debugger ID.

The contact information 94 stores the contact information about the program developer that has been requesting the issuance of the debugger ID.

### 3.3 Supplementary explanations of the third embodiment

Note that although the debugger ID management server 81 of the third embodiment provides the protected-program developing apparatus 82 with the debugger, the target of the provision is not limited to the protected-program developing apparatus 82. For example, the protected-program analyzing apparatus 83 may be provided with the debugger.

Also, although the debugger ID management file 90 of the third embedment is assumed to be a file used for managing the issued debugger ID, the debugger ID management file 90 may also manage a debugger ID that has not been issued.

Moreover, although the debugger ID management file 90 of the third embedment is assumed to manage the name and the contact information of the developer of the program for which the debugger ID has been issued, the debugger ID management file 90 may manage only the issued debugger ID.

Also, the debugger is not necessarily provided by the debugger ID management company. The debugger may be provided by, for example, a server belonging to others commissioned to develop the debugger by the debugger ID management company. If this is the case, the commissioned others acquire the information of the debugger ID from the debugger ID management server 81.

### 4. The fourth embodiment

The following explains how to display the result of the debugging performed by the debugger 14, etc.

According to the fourth embodiment, a display unit, which uses a graphical user interface for displaying operational information of the program, is added to the debugger of the first embodiment. Since the functions of the main body of the debugger are the same as the first embodiment, the explanations thereof are omitted here.

Here, the operational information of the program means information that is to be referred to in order to debug the target program. In other words, the operational information is information relating to operations of the program. More specifically, in the following example, the operational information includes a program code, register values of the processor executing the program, a symbol name and a value of a local variable, values showing a memory usage rate etc., a call hierarchy of functions, information showing whether the operation mode is the protection mode of the normal mode, and so on. In the example of the first embodiment, the operational information of the protected program 8 can be acquired based on information that the debugger 14 acquires via the debug function 7, and the operational information of the normal program 12 can be acquired based on information that the debugger 14 directly acquires .

### 4.1 Explanation of GUI 150a

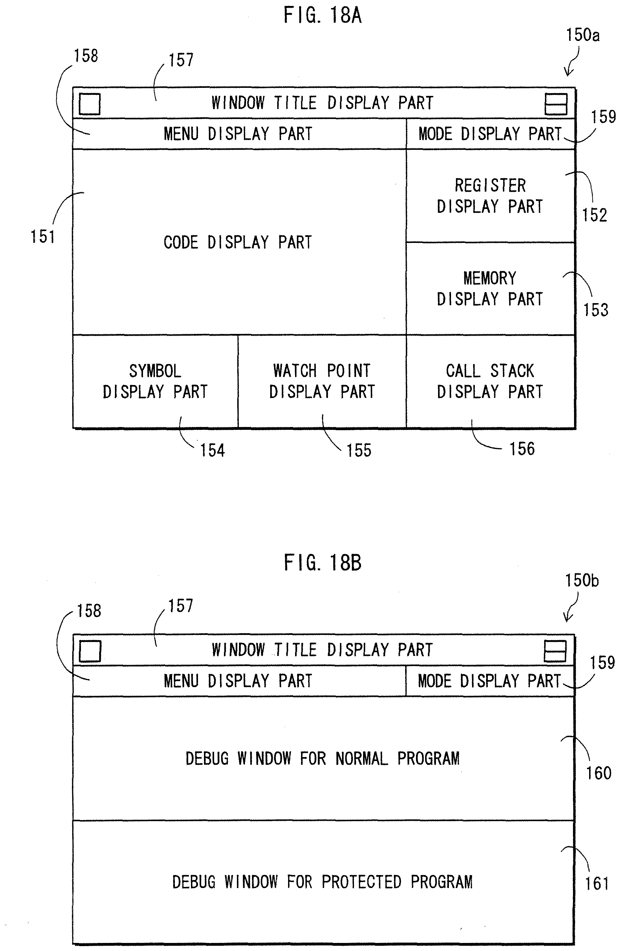

FIGs. 18A and 18B show a graphical user interface (GUI) for showing the operational information of a program.

FIG. 18A shows a GUI 150a which shows a screen of the display unit in the case where the debugger 14 is attaching to the normal program 12 and debugging the normal program 12. FIG. 18B shows a screen of the display unit in the case where the debugger 14 is executing the protected program 8 and debugging the normal program 12 and the protected program 8.

As FIG. 18A shows, the GUI 150a includes a code display part 151, a register display part 152, a memory display part 153, a symbol display part 154, a watch point display part 155, a call stack display part 156, a window title display part 157, and a menu display part 158.

The code display part 151 is for displaying a program code as the target of the debugging, and displays a source code, an assembler code, and a machine language.

The register display part 152 displays register values of the processor that is executing the program.

The memory display part 153 displays a memory value.

The symbol display part 154 displays a symbol name and a value of a local variable used in the function that has been stopped in the program as the target of the debugging.

The watch point display part 155 displays a variable specified by the symbol and the value of the variable.

The call stack display part 156 displays a call hierarchy until the stopped function in the debug target program is called.

The window title display part 157 is for displaying the title of the window, and displays the debugger, the name of the debug target program, the program status, and so on.

The menu display part 158 displays the menu for the debugger. The menu includes, for example, opening and attaching of the debug target program, termination of the debugger, displaying of a setting screen for setting a method for displaying the operations of the debugger and the program, execution, pausing and restarting of the debug target program, and the step execution.

The mode display part 159 displays, when the program stops due to the break point and so on, a mode in which the program has been executed. If the stopped program that has been executed is the normal program, the mode display part 159 displays "Normal Mode" and if the stopped program is the protected program, the mode display part displays "Protection Mode".

### 4.2 Supplementary explanations of GUI 150a

In the fourth embodiment, the mode display part displays "Normal Mode" or "Protection Mode" in order to show in which program between the normal program 12 and the protected program 8 the debug exception has been caused. However, the present invention is not limited to this. For example, the form in which the mode is displayed is not limited to the character strings of "Normal Mode" and "Protection Mode", and any form may be used as long as the form identifies the different mode. Specifically, icons may be used for this purpose. Moreover, the part where the mode is displayed is not limited to the mode display part. The mode may be displayed in the whole window, and the mode may be identified by the color of the window. A window for displaying the mode may be additionally provided.

The display parts display the states of the normal program immediately after the debugger 14 attaches to the normal program. The display parts also display the state of the normal program that is stopped according to the break point instruction and being able to be debugged by the debugger 1, and the execution state of the debugger 14 that is being executed. Moreover, the display parts can change values that have been set to the registers and the memories and variables according to input by the user, for example.

### 4.3 Explanations of GUI 150b

As FIG. 18B shows, the GUI 150b includes a debug window 160 for the normal program and a debug window 161 for the protected program.

The debug window 160 for the normal program is a window for displaying various kinds of information of the normal program 12.

The debug window 161 for the protected program is a window for displaying various kinds of information of the protected program 8. Each of the windows (the debug window 160 for the normal program and the debug window 161 for the protected program) includes the display parts of FIG. 18A (the code display part 151, the register display part 152, the memory display part 153, the symbol display part 154, the watch point display part 155, and the call stack display part 156). Note that these parts are not illustrated in FIG. 18B for simplification of the drawing.

The user debugs the normal program 12 and the protected program 8 using the debugger that has display parts as described above. Immediately after the debugger is started up or immediately after the debugger attaches to the normal program, the window has the structure illustrated in FIG. 18A.

After that, in the case where the normal program 12 executes the protected program 8 and a debug exception occurs due to the break point during the execution of the protected program, the screen illustrated in FIG. 18A is divided into two parts as FIG. 18B shows, to display various kinds of information of the protected program 8.

At this moment, in order to notify the user that it is the protected program that is to be debugged, the debugger displays a popup message. Furthermore, the debugger beeps or makes a certain sound or a sound that has been set by the user, and displays "protection mode" in the mode display part 159 to make the user conscious of that the mode is the protection mode.

### 4.4 Supplementary explanations of the fourth embodiment

In the fourth embodiment, it is assumed that the debugger window is divided into two parts at the debugging of the protected program 8. However, the debugger window is not necessarily divided. For example, a new window for debugging of the protected program may be generated. Also, it is possible to enable switching between the debug window 160 for the normal program and the debug window 161 for the protected program, with use of tabs and menus.

In the case where a debug exception occurs during the execution of the protected program 8 and it becomes possible to debug the protected program 8, the debug window 161 for the protected program comes into focus, and the user can set the break point and change the memory/register values for the protected program. Such operations are also available for the normal program 12.

In the fourth embodiment, it is assumed that in the case where a debug exception occurs during the execution of the protected program 8, the user of the debugger can debug the protected program 8 and the normal program 12 at the same time. However, it is not necessary that the debugging of the protected program 8 and the normal program 12 can be debugged at the same time. For example, it is possible to limit the debugging target to the protected program 8 and prohibit accesses to the debug window 160 for the normal program.

Also, as explained in the first embodiment, the debugging of the protected program 8 with use of the debugger 14 and the debug function 7 may be limited depending on the debugger 14. Accordingly, there are cases where it is impossible for the display parts to display information. For example, the display parts can not display information if the debugging of the protected program8 is not permitted, or if the display parts attempt to display the area accesses to which are not permitted by the access control list.

In this way, if information that cannot be displayed is requested, it is necessary to inform the user that the information can not be displayed. For this purpose, the debugger displays a popup message. Furthermore, the debugger beeps or makes a certain sound or a sound that has been set by the user, and displays a sign "*" or a prescribed character string instead of the information that can not be displayed.

In the explanation above, it is assumed that the debugger displays a sign "*" or a prescribed character string instead of the information that can not be displayed. However, the present invention is not limited to this. The debugger may display an icon, or may display nothing. Also, it is possible to change the background color of the part that can not be displayed from the background color of the part that can be displayed.

At the debugging of the protected program 8, there are information and areas that are important for development and analysis of the program, i.e. secret information included in the protected program 8 and the shared area for communication between the normal program 12 and the protected program 8. Therefore, it is preferable that the debugger 14 calls attention to the user of the debugger by devising methods for displaying the information and areas that the user has to pay attention to.

As a method for displaying the secret information, the debugger 14 acquires information relating to the secret information area included in the debug information of the protected program 8 at the debugging of the protected program 8, and when displaying the information on each display part, judges whether the code and the data to be displayed are included in the secret information area.

If the debugger judges that the information is secret information and the debugger has been configured by the user so as not to display secret information, the debugger does not display the information, and a blank is displayed instead.

On the other hand, if the debugger has been configured to display secret information, the debugger displays the secret information with changing the color of the characters to a color preset by the user (e.g. to red) to emphasize that the information is secret information. Furthermore, the debugger displays a popup message, and beeps or makes a certain sound or a sound that has been set by the user. With these operations, the debugger calls attention to the user by notifying that the information is secret information.

In the fourth embodiment, it is assumed that a blank is displayed instead of the secret information if the debugger has been configured so as not to display secret information. However, the debugger does not necessarily display a blank. For example, the debugger may fill in the area where the secret information is to be displayed with a color different from the background color, or may use an icon. In other words, any method may be used as long as the debugger can hide the secret information from the user.

As a method for displaying the shared information shared between the normal program 12 and the protected program 8, the debugger 14 acquires, from the protected OS 6, information relating to the area shared between the normal mode and the protection mode at the debugging of the protected program 8, and when displaying the information on each display part, judges whether the code and the data to be displayed are included in the shared information area.

If the information is included in the shared information area, the debugger displays the information with changing the color of the characters to a color preset by the user (e.g. to yellow) to emphasize that the information is shared information. Furthermore, the debugger displays a popup message, and beeps or makes a certain sound or a sound that has been set by the user. With these operations, the debugger calls attention to the user by notifying that the information is shared information.

In the same manner as in the case of the secret information, various methods may be applied. However, it is preferable that the shared information is displayed in a manner different from the secret information so that the user can distinguish between the shared information and the secret information.

In the fourth embodiment, it is assumed that the color of the characters used for displaying the secret information and the shared information has been present by the user. However, it is not necessary to change the character color. For example, the background color may be changed, or the style of the characters may be changed to bold, italic or the like. Also, character decoration, such as underlining and shading, may be applied. Furthermore, the whole secret information and the shared information may be surrounded with a frame.

### 5. The fifth embodiment

According to the fifth embodiment, a display unit, which uses a character-based user interface different from the fourth embodiment to display operational information of the program, is added to the debugger of the first embodiment. Since the functions of the main body of the debugger are the same as the first embodiment, the explanations thereof are omitted here.

### 5.1 Explanations of CUI

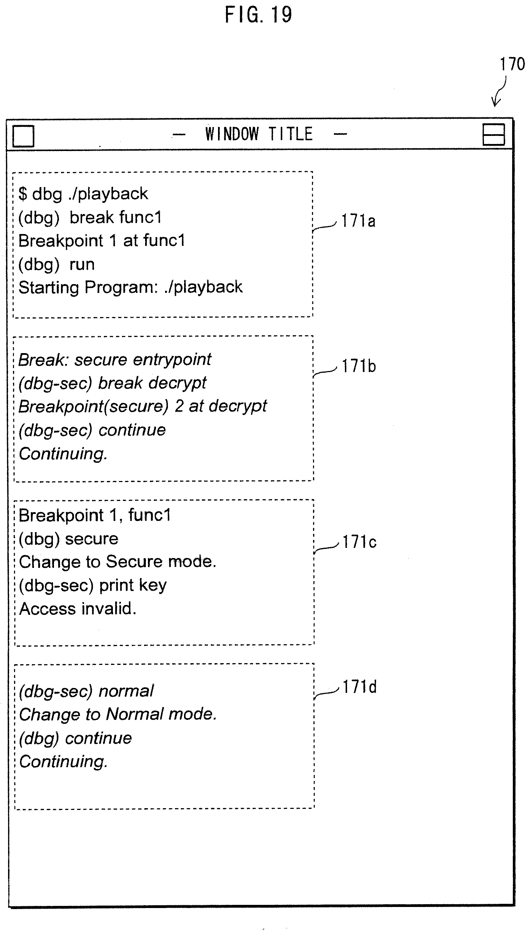

FIG. 19 shows how to display a character-based user interface (CUI 170) of the fifth embodiment of the present invention.

Upon being started up, the debugger 14 displays a prompt that is different from the console, such as "(dbg)", to show that the debugger 14 is available. This shows that it is possible to debug the normal program 12 (A display example 171a of the debug result) .

When the normal program 12 is executed and the protected program 8 is executed by the normal program 12, a debug exception is caused according to the operations described in the first embodiment, at the break point that has been set at the entry point of the protected program at the first execution.

At this moment, to show that it is possible to debug the protected program 8, the debugger 14 displays a prompt such as "(dbg-sec)" that is different from the prompt displayed at the debugging of the normal program 12. This is for distinguishing the debugging of the protected program 8 from the debugging of the normal program 12. The prompt and the message from the debugger 14 should be displayed such that the user can distinguish between them. For example, the prompts may be displayed with parentheses as illustrated in the drawing.

Moreover, if the protected program 8 is stopped during the execution, the debugger 14 changes the style of the prompts, messages from the debugger 14 and the characters input by the user to be italic, to show that the protected program 8 is stopped during the execution, so that the user can recognize the fact (A display example 171b of the debug result).

In the state described above, it is possible to debug the stopped program. However, in the fifth embodiment, the debugging is performed on the normal program 12 and the protected program 8 that cooperate with each other. Therefore, it is preferable to enable the debugger 14 to debug the protected program 8 during the execution of the normal program 12 and, conversely, debug the normal program 12 during the execution of the protected program 8.

The following describes an interface used in such a case.

There is a case where the user of the debugger 14 wishes to debug not the normal program 12 but the protected program 8 when a debug exception occurs during the execution of the normal program 12 and the normal program 12 is debuggable. If this is the case, the user can input a command "secure" when the normal program 12 is in the debuggable state, to change the mode of the data processing apparatus 1 to the protection mode. As a result, it becomes possible to debug the protected program 8.

At this moment, the prompt changes from "(dbg)" to " (dbg-sec) ". However, the style of the characters does not change to italic or the like, because the state is the same, i.e., the normal program 12 still stops in the middle of the execution (A display example 171c of the debug result).

On the other hand, if a debug exception occurs during the execution of the protected program 8 and the protected program 8 is debuggable, and if the user wishes to debug not the normal program 12 but the protected program 8, it is possible to make the normal program debuggable by inputting a command "normal".

At this moment, the prompt changes from "(dbg-sec)" to "(dbg)". However, the style of the characters does not change to the normal style, because the state is the same, i.e., the protected program 8 still stops in the middle of the execution (A display example 171d of the debug result).

When the user of the debugger 14 attempts to debug the protected program 8, if the debugging is not permitted or the user attempts to display information of the area that is not permitted to access, a message "Access invalid" or the like is displayed when the user input the command. This informs the user of that the debugging is not permitted or the access is prohibited.

### 5.2 Supplementary explanations of the fifth embodiment

According to the fifth embodiment, the prompt to be displayed is changed in order to distinguish which between the normal program 12 and the protected program 8 is debuggable. However, it is not necessary to change the prompt.

For example, separately from the prompt, characters that show the current state may be displayed at every completion of processing required by the user. Also, the style of the prompt, messages from the debugger, and characters input by the user may be changed to be bold or italic, or to have a different character color or a different background color, or may be decorated with underlines or shades.

Moreover, although the style of the character is changed to be italic to distinguish whether the program stopped during its execution is the normal program 12 or the protected program 8, it is not necessary to change the style to be italic.

For example, the style may be changed to be another, such as the bold style, or the character color or the background color may be changed, or may be decorated with underlines or shades . Moreover, a character string that shows whether the program stopped during its execution is the normal program 12 or the protected program 8 may be displayed at the head of the line.

Also, the all the outputs in the past may be erased every time the user is enabled to enter a command or every time the processing is switched between the debugging of the normal program 12 and the debugging of the protected program 8.

In this embodiment, the following are used as examples of the commands and the messages.

A message "Change to Secure mode." shows that the mode of the data processing apparatus 1 has been changed to the protection mode. A message "Change to Normal mode." shows that the mode of the data processing apparatus 1 has been changed to the normal mode. Messages notify the user of the result of the processing that has been performed according to the command input by the user.

The command "secure" is used for changing the mode to the protection mode, and the command "normal" is used for changing the mode to the normal mode.

The commands and their corresponding messages vary depending on the debugger. Therefore, their detailed explanations are omitted here.

### 6. Supplementary explanations

The present invention is explained based on the embodiments above. However, the present invention is not limited to the embodiments. The following modifications are included in the present invention.
(1) In the embodiments above, it is assumed that the permitted-debugger ID information 52 and the access control list 53 are included in the protected program 8. However, the permitted-debugger ID information 52 and the access control list 53 may be acquired from outside the data processing apparatus. If this is the case, information that shows correspondence between the protected program 8a and the permitted-debugger ID information 52, etc. may be acquired as well.
   As a result, it becomes easy to judge whether or not the debugging of the protected program 8 is permitted.
   Here, the permitted-debugger ID information 52 and so on show the debuggable debugger IDs and accessible areas. Accordingly, if the permitted-debugger ID information 52 and so on are analyzed, it will be impossible to protect the protected program 8. Therefore, it is necessary that the data processing apparatus store them in a secure area such as the protection mechanism.
   Also, needless to say, it is necessary to securely acquire the permitted-debugger ID information 52 and so on so as not to be acquired by tapping by an unauthorized person.
(2) In the embodiments above, it is assumed that the protected program 8 and the normal program 12 run on the protected OS 6 and the normal OS 11 respectively. However, the present invention is no limited to this. For example, they may run directly without involving the OS.
   If this is the case, the debug function 7, the switching driver 13 and the debugger-use switching driver 15 may be provided as functions of the LSI 2, and they perform processing such as monitoring of interruptions as well. Also, it can be assumed that the debugger 14 may have been coded in a language that can be directly executed by a CPU or the like on the LSI 2.
(3) In the embodiments above, it is assumed that the debugger 14, the switching driver 14, the debugger-use switching driver 14, the debug function 7 and so on are each implemented as software operating on the LSI 2. However, the present invention is not limited to this. For example, they may be realized as functions of the LSI 2, or hardware that communicates with the LSI 2. Also, only part of each component may be realized as the function of the LSI 2 or hardware.
(4) In the third embodiment above, for an organization that own a plurality of the protected-program developing apparatus 82, an identical debugger ID may be given to the plurality of the protected-program developing apparatus 82, according to requests transmitted via the protected-program developing apparatus 82.
(5) In the fourth and the fifth embodiments, examples of the user interface are explained with reference to FIG. 18 and FIG. 19. However, the display of the user interface is not limited to those shown in FIG. 18 and FIG. 19.
   For example, part of the components constituting the interface may be not displayed. Also, needless to say, the positions displaying the components may be replaced with each other and the style of the characters or the likes may be changed.
(6) In the embodiments above, it is assumed that the debug function 7 confirms that the debugging is permitted by checking the debugger ID, and also confirms that the access to the requested area is permitted by checking the access control list, and only when the both are confirmed, the debugging will be performed. However, the debugging may be permitted even though only one of them is confirmed.
   Also, regarding the order of the confirmations, it is not necessary to firstly confirm the debugger Id and next confirm the access control list. Any of them may be confirmed first.
(7) In the embodiments above, it is assumed that the debugger 14 attaches to the normal program 12 and debugs the protected program 8 that cooperate with the normal program 12. However, the debugger may be able to directly attach the protected program 8.
   If this is the case, the debugger 14 can not attach a program that is not loaded. Accordingly, the protected program 8 is to be loaded on the memory in advance, and a debug exception that has occurred in the protected program 8 is informed to the debugger 14 via the debugger-use switching driver 15.
   Moreover, if the data processing apparatus is equipped with an input/output device that can be used in the protection mode, the debugger may operate in the protection mode instead of in the normal mode. If this is the case, the debug function 7 and the debugger 14 directly communicate with each other, without involving the debugger-use switching driver 15.
(8) In the embodiments above, the stop flag is activated in the preprocessing so that the protected program 8 and so on are always stopped before execution thereof. However, the present invention is not limited to this.
   For example, in the case of the modification (7) above, where the debugger 14 can directly attach to the protected program 8 and set the break point, and in the case where only the normal program 12 is to be debugged, it is inconvenient if the program stops every time the execution of the protected program 8 is started. Accordingly, it is possible to enable the user to determine whether or not to activate the stop flag, instead of always activating the stop flag in the preprocessing.
(9) In the embodiments above, how to generate the debugger IDs is not particularly mentioned. However, the following methods may be used.
   For example, the debugger ID management server 81 may generate random numbers, and allocate them to the debuggers as the debugger IDs.
   Alternatively, hash values of part or all of the protected program 8 may be used as the debugger IDs, for example.
   If this is the case, the debugger ID judging unit 22 stores the debugger ID of the debugger 14 in the comparison value storing unit 33. Upon receiving a request for debugging from the debugger 14, the debugger ID computing unit 32 calculates the hash value of the protected program 8 as the target of the debugging, and performs the judgment according to the comparison between the calculation result and the value stored in the comparison value storing unit 33 performed by the comparing unit 31.
   According to this operation, the comparison between the hash value and the debugger ID fails if the protected program 8 has been changed. Therefore, by updating the protected program 8, it is possible to prohibit the old debugger to debug the protected program 8.
   In this case, the protected-program developing apparatus 82 transmits the protected program 8 to the debugger ID management server 81 at completion of the part of the protected program from which the hash value will be acquired. The debugger ID management server 81 calculates the hash value of the protected program 8, and returns the hash value as the debugger ID to the protected-program developing apparatus 82. The returned debugger ID can be known to only the developer of the protected program 8. Accordingly, to create a debugger that can debug the protected program 8, the creator of the debugger has to request the developer of the protected program 8 to notify the debugger ID, and allocate the notified debugger ID to the debugger 14. However, even in this case, if the owner of the debugger ID management server 81 is identical to the creator of the debugger, the creator can create the debugger without being informed of the debugger ID. This is because the creator can acquire the debugger ID from the debugger ID management server belonging to the creator.
   Also, in the case of using the hash value as described above, the debugger ID of the debugger that can debug the protected program 8 can be calculated by calculation of the hash value. Accordingly, it is unnecessary to include the permitted-debugger ID information 52 into the protected program 8.
   More over, the debugger ID may include a value unique to each program developer and a value unique to each program. If this is the case, whether to permit the debugging or not for each program developer is confirmed by checking the value unique to the developer, and the value for the program is checked only when the developer is permitted to perform the debugging. With this operation, more precise debug control can be realized.
(10) In the embodiments above, the explanation is based on the assumption that a debug exception due to a break point is detected during the execution of the protected program 8a and the protected program 8a is debugged. However, the present invention is not limited to this example. The debugging by the debugger 14 may be performed according to detection of a general error interruption occurred during the execution of the protected program 8. A general error interruption is caused by, for example, occurrence of division by 0 during the execution of the protected program 8, and occurrence of an overflow. The debugger 14 can debug the protected program 8 by, for example, the protected OS 6 notifying the switching driver 13 of the debug exception (e.g. S402) when a general error interruption occurs.
(11) In the embodiments above, whether to permit the debugging of the protected program 8 is controlled. However, also regarding the normal program 12, a debugger ID may be allocated to the debugger that is permitted to perform the debugging, and whether to permit the debugging of the normal program 12 may be controlled as well.
(12) Part or all.of the components described above may be realized as an integrated circuit such as an LSI. If this is the case, the integrated circuit may be the same as the LSI 2, and may be different from the LSI 2.
   The LSI may be variously described as an IC, a system LSI, a super LSI or an ultra LSI depending on the level of integration. Needless to say, the system LSI 2 realzied at any integration level may be included in the present invention. Furthremore, LSI circuits whose configurations can be altered after production such as the programmable FPGA (Field Programmable Gate Array) or a reconfigurable processorwhose circuit cell connections and settings are configurable may be used.
   Moreover, if, due to progress in the field of semiconductor technology or the derivation of another technology, a technology to replace LSI emerges, such a technology may be used to integrate the functional blocks. The use of biotechnology or the like is considered to be a possibility.
(13) The present invention may be the methods mentioned above. Further, these methods may be a computer program executed by a CPU and further be the digital signal of the computer program.
(14) Further, the present invention may be a recording medium that can be read by a computer and on which the computer program or the digital signal are recorded. Examples of such recording media include a flexible disk, a hard disk, a CD-ROM, an MO, a DVD, a DVD-ROM, a DVD-RAM, a BD (Blu-ray Disc), a semiconductor memory and the like. Further, the present invention may be the digital signal recorded on the recording medium.

### Industrial Applicability

The data processing apparatus pertaining to the present invention controls whether to permit execution of debugging to protect programs. The present invention is particularly useful as an apparatus for supporting development of programs while protecting the programs.

## Claims

1. A data processing apparatus (1) comprising:
a debugging unit (7) operable to perform execution of debugging, the data processing apparatus controlling the execution of debugging performed by the debugging unit; a first acquiring unit operable to acquire an identifier of the debugging unit from the debugging unit;
a second acquiring unit operable to acquire a verification value included in a prescribed part of a target program (8) that is a target of debugging and protected against an unauthorized access;
a judging unit (22) operable to make a comparison between the identifier and the verification value, and make a judgment on whether the debugging of the target program is permitted according to a result of the comparison; and
a control unit (21) operable to prohibit the execution of the debugging of the target program
when the judging unit judges that the debugging of the target program is not permitted, wherein the prescribed part of the target program includes an access control list (60) that shows
whether to permit an access to each of parts constituting the target program,
the second acquiring unit includes an access control list acquiring subunit operable to acquire the access control list from the prescribed part of the target program,
the data processing apparatus further comprises an access judging unit operable to make an judgment on whether the access to each of parts constituting the target program is permitted according to the access control list acquired by the access control list acquiring subunit, and
the control unit prohibits execution of debugging of a given part of parts constituting the target program when the judging unit judges that the debugging of the target program is permitted and when the access judging unit judges that the access to the given part of parts constituting the target program is not permitted, and permits the debugging unit to execute the debugging of the given part of parts constituting the target program when the judging unit judges that the debugging of the target program is permitted and when the access judging unit judges that the access to the given part of parts constituting the target program is permitted;
the judging unit includes a comparison value holding subunit operable to store a comparison value, the comparison value holding subunit being protected against the unauthorized access, and
the judging unit performs a prescribed calculation using the verification value and the identifier, and judges that the debugging of the target program is permitted when a result of the prescribed calculation matches the comparison value stored in the comparison value holding subunit;
wherein
the access control list includes a plurality of address ranges, the plurality of the address ranges respectively corresponding to parts constituting the target program,
the access control list includes a plurality of pieces of access information, each of the plurality of the pieces of the access information indicating whether to permit the access to each of parts constituting the target program, the plurality of the address ranges respectively corresponding to the plurality of the pieces of the access information, and
the access judging unit makes the judgment by referring to the access information that corresponds to the given part of parts constituting the target program.

2. The data processing apparatus of Claim 1, wherein
the access control list includes a plurality of symbols, one of the plurality of the symbols being included in each of parts constituting the target program,
the access control list includes a plurality of pieces of access information, each of the plurality of the pieces of the access information indicating whether to permit the access to each of parts constituting the target program, the plurality of the symbols respectively corresponding to the plurality of the pieces of the access information, and
the access judging unit makes the judgment by referring to the access information that corresponds to a symbol included in the given part of parts constituting the target program.

3. The data processing apparatus of Claim 1, wherein
the prescribed part of the target program includes a plurality of the verification values,
the prescribed part of the target program includes a plurality of the access control lists, each of the plurality of the verification values corresponding to at least one of the plurality of the access control lists,
the judging unit makes the judgment by comparing each of the plurality of the verification values with the identifier, and
the access judging unit makes the judgment based on one of the plurality of the access control lists corresponding to one of the plurality of the verification values, when the judging unit judges that the one of the plurality of the verification values matches the identifier.

4. The data processing apparatus of Claim 1, further comprising a display unit, wherein
the control unit includes a display control subunit operable to control the display unit to show that the execution of the debugging of the given part of the target program is prohibited when the control unit prohibits execution of debugging of the given part of parts constituting the target program, and to control the display unit to show a result of the debugging of the given part of the target program when the control unit permits execution of debugging of the given part of parts constituting the target program.

5. The data processing apparatus of Claim 1, further comprising a secure domain, the secure domain comprising a mechanism for preventing an unauthorized access from outside,
wherein
the data processing apparatus switches between a normal mode and secure mode, and uses the secure domain to perform an operation in the secure mode,
the data processing apparatus further comprises a switching unit operable to switch between the normal mode and the secure mode,
a normal program that runs in the normal mode is capable of accessing a secure program that runs in the secure mode, by sending a request for prescribed processing to the secure program via the switching unit,
the target program is stored within the secure domain,
the second acquiring unit acquires the verification value from the prescribed part of the target program within the secure domain, and
the judging unit makes the judgment within the secure domain.

6. The data processing apparatus of Claim 5, wherein
the debugging unit resides outside of the secure domain and operates in the normal mode, the data processing apparatus further comprises a secure debugger that is included in the secure domain and performs debugging in the secure mode,
the debugging unit outputs a request for debugging the target program to the control unit, and
according to the request, the control unit controls the judging unit to make the judgment, and when the judging unit judges that the debugging of the target program is not permitted, prohibits the secure debugger from debugging the target program relating to the request.

7. The data processing apparatus of Claim 6, wherein
the access judging unit makes the judgment within the secure domain, and
the control unit prohibits the secure debugger from execution of the debugging of a given part of parts constituting the target program relating to the request when the judging unit judges that the debugging of the target program is permitted and when the access judging unit judges that the access to the given part of parts constituting the target program is not permitted, and permits the secure debugger to execute the debugging of the given part,of parts constituting the target program when the judging unit judges that the debugging of the target program is permitted and when the access judging unit judges that the access to the given part of parts constituting the target program is permitted.

8. The data processing apparatus of Claim 6, wherein
he debugging unit has a function to debug the normal program and does not have a function to debug the target program that cooperates with the normal program, and when the debugging unit performs the debugging of the target program, the debugging unit outputs to the control unit the request for debugging the target program, and the control unit controls the secure debugger to debug the target program in response to the request, the secure debugger having a function to debug the target program that cooperates with the normal program.

9. The data processing apparatus of Claim 8, wherein
the debugging unit outputs via the control unit to the secure debugger a process identifier that identifies the normal program which the debugging unit can debug, and
the secure debugger changes an instruction located at an entry point of the target program to a break instruction, the target program cooperating with the normal program indicated by the process identifier output by the debugging unit.

10. The data processing apparatus of Claim 8, wherein
when a debug exception is detected during execution of the target program in the secure mode, the control unit further transmits a notification of the debug exception to the debugging unit,
upon receiving the notification, the debugging unit outputs to the control unit a request for generating debug information showing a debug result, and
upon receiving the request for generating the debug information, the control unit controls the secure debugger to debug the target program to generate the debug information when the judging unit judges that the debugging of the target program is permitted, and outputs the generated debug information to the debugging unit.

11. The data processing apparatus of Claim 8, further comprising:
a first result display unit operable to display a result of debugging of the normal program in a first display area; and
a second result display unit operable to display a result of debugging of the target program that cooperates with the normal program in a second display area, which is different from the first display area, wherein
when the target program and the normal program which cooperate with each other are running, the first result display unit displays the result of the debugging of the normal program in the first display area, and the second result display unit displays the result of the debugging of the target program in the second display area.

12. The data processing apparatus of Claim 8, wherein
a normal OS operates in the normal mode,
a protected OS operates in the secure mode,
the normal program operates in the normal mode, as a process generated by the normal OS,
the debugging unit operates in the normal mode, as a debugger that operates on the normal OS,
the target program operates in the secure mode, as a process generated by the protected OS, and
the secure debugger is implemented as a function of the protected OS.

13. The data processing apparatus of Claim 6, wherein
according to the request for debugging the target program output by the debugging unit, the control unit controls the judging unit to make the judgment, and when the judging unit judges that the debugging of the target program is not permitted, outputs a debug prohibition notification, showing that the debugging of the target program is prohibited, to the debugging unit.

14. A data processing method used by a data processing apparatus for controlling execution of debugging performed by a debugging unit, the data processing method comprising:
acquiring from the debugging unit an identifier of the debugging unit;
acquiring a verification value included in a prescribed part of a target program that is a target of debugging and protected against an unauthorized access;
making a comparison between the identifier and the verification value (S101, S102) and making a judgment on whether the debugging of the target program is permitted according to a result of the comparison; and
prohibiting the execution of the debugging of the target program when the judging unit judges that the debugging of the target program is not permitted, wherein
the prescribed part of the target program includes an access control list that shows whether to permit an access to each of parts constituting the target program,
the step of acquiring the identifier includes a sub-step of acquiring the access control list from the prescribed part of the target program,
the data processing method further comprises a step of making an judgment on whether the access to each of parts constituting the target program is permitted according to the access control list, and
in the step of prohibiting, execution of debugging of a given part of parts constituting the target program is prohibited when the debugging of the target program is permitted and when the access to the given part of parts constituting the target program is not permitted, and execution of the debugging of the given part of parts constituting the target program is permitted when the debugging of the target program is permitted and when the access to the given part of parts constituting the target program is permitted,
the data processing apparatus includes a comparison value holding unit operable to store a comparison value, the comparison value holding unit being protected against the unauthorized access, and
in the step of making the judgment, a prescribed calculation using the verification value and the identifier is performed, and the debugging of the target program is judged as being permitted when a result of the prescribed calculation matches the comparison value stored in the comparison value holding unit;
wherein
the access control list includes a plurality of address ranges, the plurality of the address ranges respectively corresponding to parts constituting the target program,
the access control list includes a plurality of pieces of access information, each of the plurality of the pieces of the access information indicating whether to permit the access to each of parts constituting the target program, the plurality of the address ranges respectively corresponding to the plurality of the pieces of the access information, and
the access judging unit makes the judgment by referring to the access information that corresponds to the given part of parts constituting the target program.

15. A computer-readable control program that causes a data processing apparatus to control execution of debugging performed by a debugging unit, the control program executing the steps of the data processing method according to claim 14.

16. An integrated circuit configured to be used in a data processing apparatus that controls execution of debugging performed by a debugging unit, the integrated circuit comprising:
a debugging unit operable to perform execution of debugging, the data processing apparatus controlling the execution of debugging performed by the debugging unit;
a first acquiring unit operable to acquire an identifier of the debugging unit from the debugging unit;
a second acquiring unit operable to acquire a verification value included in a prescribed part of a target program that is a target of debugging and protected against an unauthorized access;
a judging unit operable to make a comparison between the identifier and the verification value, and make a judgment on whether the debugging of the target program is permitted according to a result of the comparison; and
a control unit operable to prohibit the execution of the debugging of the target program when the judging unit judges that the debugging of the target program is not permitted,
wherein
the prescribed part of the target program includes an access control list that shows whether to permit an access to each of parts constituting the target program,
the second acquiring unit includes an access control list acquiring subunit operable to acquire the access control list from the prescribed part of the target program,
the data processing apparatus further comprises an access judging unit operable to make an judgment on whether the access to each of parts constituting the target program is permitted according to the access control list acquired by the access control list acquiring subunit, and
the control unit prohibits execution of debugging of a given part of parts constituting the target program when the judging unit judges that the debugging of the target program is permitted and when the access judging unit judges that the access to the given part of parts constituting the target program is not permitted, and permits the debugging unit to execute the debugging of the given part of parts constituting the target program when the judging unit judges that the debugging of the target program is permitted and when the access judging unit judges that the access to the given part of parts constituting the target program is permitted
the judging unit includes a comparison value holding subunit operable to store a comparison value, the comparison value holding subunit being protected against the unauthorized access, and
the judging unit performs a prescribed calculation using the verification value and the identifier, and judges that the debugging of the target program is permitted when a result of the prescribed calculation matches the comparison value stored in the comparison value holding subunit;
wherein
the access control list includes a plurality of address ranges, the plurality of the address ranges respectively corresponding to parts constituting the target program,
the access control list includes a plurality of pieces of access information, each of the plurality of the pieces of the access information indicating whether to permit the access to each of parts constituting the target program, the plurality of the address ranges respectively corresponding to the plurality of the pieces of the access information, and
the access judging unit makes the judgment by referring to the access information that corresponds to the given part of parts constituting the target program.

## Patentansprüche

1. Datenverarbeitungsvorrichtung (1), umfassend:
eine Fehlerbehebungseinheit (7), die betriebsfähig ist zum Durchführen der Ausführung einer Fehlerbehebung, wobei die Datenverarbeitungsvorrichtung die durch die Fehlerbehebungseinheit durchgeführte Ausführung der Fehlerbehebung steuert,
eine erste Erfassungseinheit, die betriebsfähig ist zum Erhalten eines Identifizierers der Fehlerbehebungseinheit von der Fehlerbehebungseinheit,
eine zweite Erfassungseinheit, die betriebsfähig ist zum Erhalten eines Prüfungswerts, der in einem vorgeschriebenen Teil eines Zielprogramms (8) enthalten ist, das ein Ziel der Fehlerbehebung ist und gegen einen nicht-autorisierten Zugriff geschützt ist,
eine Bestimmungseinheit (22), die betriebsfähig ist zum Vornehmen eines Vergleichs zwischen dem Identifizierer und dem Prüfungswert und zum Bestimmen, ob die Fehlerbehebung des Zielprogramms zulässig ist, gemäß dem Vergleichsergebnis, und
eine Steuereinheit (21), die betriebsfähig ist zum Unterbinden der Ausführung der Fehlerbehebung des Zielprogramms, wenn die Bestimmungseinheit bestimmt, dass die Fehlerbehebung des Zielprogramms nicht zulässig ist,
wobei der vorgeschriebene Teil des Zielprogramms eine Zugriffssteuerliste (60) enthält, die angibt, ob ein Zugriff auf die das Zielprogramm bildenden Teile zulässig ist,
wobei die zweite Erfassungseinheit eine Zugriffssteuerliste-Erfassungsteileinheit enthält, die betriebsfähig ist zum Erhalten der Zugriffssteuerliste aus dem vorgeschriebenen Teil des Zielprogramms,
wobei die Datenverarbeitungsvorrichtung weiterhin eine Zugriffsbestimmungseinheit umfasst, die betriebsfähig ist zum Vornehmen einer Bestimmung, ob der Zugriff auf die Teile des Zielprogramms zulässig ist, gemäß der durch die Zugriffssteuerliste-Erfassungsteileinheit erhaltenen Zugriffssteuerliste, und
wobei die Steuereinheit eine Ausführung der Fehlerbehebung auf einem gegebenen Teil innerhalb der das Zielprogramm bildenden Teile unterbindet, wenn die Bestimmungseinheit bestimmt, dass die Fehlerbehehebung des Zielprogramms zulässig ist, und die Zugriffsbestimmungseinheit bestimmt, dass der Zugriff auf den gegebenen Teil innerhalb der das Zielprogramm bildenden Teile nicht zulässig ist, und der Fehlerbehebungseinheit die Ausführung der Fehlerbehebung des gegebenen Teils innerhalb der das Zielprogramm bildenden Teile gestattet, wenn die Bestimmungseinheit bestimmt, dass die Fehlerbehebung des Zielprogramms zulässig ist, und die Zugriffsbestimmungseinheit bestimmt, dass der Zugriff auf den gegebenen Teil innerhalb der das Zielprogramm bildenden Teile zulässig ist,
wobei die Bestimmungseinheit eine Vergleichswert-Speicherteileinheit enthält, die betriebsfähig ist zum Speichern eines Vergleichswerts, wobei die Vergleichswert-Speicherteileinheit gegenüber einem nicht-autorisierten Zugriff geschützt ist,
wobei die Bestimmungseinheit eine vorgeschriebene Berechnung unter Verwendung des Prüfungswerts und des Identifizierers durchführt und bestimmt, dass die Fehlerbehebung des Zielprograms zulässig ist, wenn das Ergebnis der vorgeschriebenen Berechnung dem in der Vergleichswert-Speicherteileinheit gespeicherten Vergleichswert entspricht,
wobei die Zugriffssteuerliste eine Vielzahl von Adressbereichen enthält, wobei die Vielzahl von Adressbereichen jeweils den das Zielprogramm bildenden Teilen entsprechen,
wobei die Zugriffssteuerliste eine Vielzahl von Zugriffsinformationen enthält, wobei jede aus der Vielzahl von Zugriffsinformationen angibt, ob der Zugriff auf einen der das Zielprogramm bildenden Teile zulässig ist, wobei die Vielzahl von Adressbereichen jeweils der Vielzahl von Zugriffsinformationen entsprechen, und
wobei die Zugriffsbestimmungseinheit die Bestimmung vornimmt, indem sie auf die Zugriffsinformation Bezug nimmt, die dem gegebenen Teil innerhalb der das Zielprogramm bildenden Teile entspricht.

2. Datenverarbeitungsvorrichtung nach Anspruch 1, wobei:
die Zugriffssteuerliste eine Vielzahl von Symbolen enthält, wobei jeweils eines aus der Vielzahl von Symbolen in jedem der das Zielprogramm bildenden Teile enthalten ist,
die Zugriffssteuerliste eine Vielzahl von Zugriffsinformationen enthält, wobei jede aus der Vielzahl von Zugriffsinformationen angibt, ob ein Zugriff auf jeweils einen der das Zielprogramm bildenden Teile zulässig ist, wobei die Vielzahl der Symbole jeweils der Vielzahl von Zugriffsinformationen entsprechen, und
die Zugriffsbestimmungseinheit die Bestimmung vornimmt, indem sie auf die Zugriffsinformation Bezug nimmt, die einem in dem gegebenen Teil innerhalb der das Zielprogramm bildenden Teile enthaltenen Symbol entspricht.

3. Datenverarbeitungsvorrichtung nach Anspruch 1, wobei:
der vorgeschriebene Teil des Zielprogramms eine Vielzahl von Prüfungswerten enthält,
der vorgeschriebene Teil des Zielprogramms eine Vielzahl von Zugriffssteuerlisten enthält,
jeder aus der Vielzahl von Prüfungswerten wenigstens einer aus der Vielzahl von Zugriffssteuerlisten entspricht,
die Bestimmungseinheit die Bestimmung vornimmt, indem sie jede aus der Vielzahl von Prüfungswerten mit dem Identifizierer vergleicht, und
die Zugriffsbestimmungseinheit die Bestimmung basierend auf einer aus der Vielzahl der Zugriffssteuerlisten, die einem aus der Vielzahl der Prüfungswerte entspricht, vornimmt, wenn die Bestimmungseinheit bestimmt, dass der eine aus der Vielzahl der Prüfungswerte dem Identifizierer entspricht.

4. Datenverarbeitungsvorrichtung nach Anspruch 1, die weiterhin eine Anzeigeeinheit umfasst, wobei die Steuereinheit eine Anzeigesteuerteileinheit enthält, die betriebsfähig ist zum Steuern der Anzeigeeinheit für das Anzeigen, dass die Ausführung der Fehlerbehebung des gegebenen Teils des Zielprogramms unterbunden wird, wenn die Steuereinheit die Ausführung der Fehlerbehebung des gegebenen Teils innerhalb der das Zielprogramm bildenden Teile unterbindet, und zum Steuern der Anzeigeeinheit für das Anzeigen eines Ergebnisses der Fehlerbehebung des gegebenen Teils des Zielprogramms, wenn die Steuereinheit die Ausführung der Fehlerbehebung des gegebenen Teils innerhalb der das Zielprogramm bildenden Teile gestattet.

5. Datenverarbeitungsvorrichtung nach Anspruch 1, die weiterhin eine sichere Domäne umfasst, wobei die sichre Domäne einen Mechanismus zum Verhindern eines nicht-autorisierten Zugriffs von außerhalb umfasst, wobei:
die Datenverarbeitungsvorrichtung zwischen einem normalen Modus und einem sicheren Modus wechselt und die sichere Domäne verwendet, um einen Betrieb in dem sicheren Modus durchzuführen,
die Datenverarbeitungsvorrichtung weiterhin eine Schalteinheit umfasst, die betriebsfähig ist zum Schalten zwischen dem normalen Modus und dem sicheren Modus,
ein normales Programm, das in dem normalen Modus ausgeführt wird, befähigt ist zum Zugreifen auf ein sicheres Programm, das in dem sicheren Modus ausgeführt wird, indem es eine Anfrage für eine vorgeschriebene Verarbeitung an das sichere Programm über die Schalteinheit sendet,
das Zielprogramm innerhalb der sicheren Domäne gespeichert ist,
die zweite Erfassungseinheit den Prüfungswert aus dem vorgeschriebenen Teil des Zielprogramms innerhalb der sicheren Domäne erhält, und
die Bestimmungseinheit die Bestimmung innerhalb der sicheren Domäne vornimmt.

6. Datenverarbeitungsvorrichtung nach Anspruch 5, wobei:
die Fehlerbehebungseinheit außerhalb der sicheren Domäne residiert und in dem normalen Modus betrieben wird,
die Datenverarbeitungsvorrichtung weiterhin einen sicheren Fehlerbeheber umfasst, der in der sicheren Domäne enthalten ist und eine Fehlerbehebung in dem sicheren Modus durchführt,
die Fehlerbehebungseinheit eine Anfrage für eine Fehlerbehebung des Zielprogramms an die Steuereinheit ausgibt, und
die Steuereinheit gemäß der Anfrage die Bestimmungseinheit steuert, um die Bestimmung vorzunehmen, und, wenn die Bestimmungseinheit bestimmt, dass die Fehlerbehebung des Zielprogramms nicht zulässig ist, unterbindet, dass der sichere Fehlerbeheber eine Fehlerbehebung des Zielprogramms gemäß der Anfrage durchführt.

7. Datenverarbeitungsvorrichtung nach Anspruch 6, wobei:
die Zugriffsbestimmungseinheit die Bestimmung innerhalb der sicheren Domäne vornimmt, und
die Steuereinheit unterbindet, dass der sichere Fehlerbeheber die Fehlerbehebung eines gegebenen Teils innerhalb der das Zielprogramm bildenden Teile gemäß der Anfrage durchführt, wenn die Bestimmungseinheit bestimmt, dass die Fehlerbehebung des Zielprogramms zulässig ist, und die Zugriffsbestimmungseinheit bestimmt, dass ein Zugriff auf den gegebenen Teil innerhalb der das Zielprogramm bildenden Teile nicht zulässig ist, und gestattet, dass der sichere Fehlerbeheber die Fehlerbehebung des gegebenen Teils innerhalb der das Zielprogram bildenden Teile ausführt, wenn die Bestimmungseinheit bestimmt, dass die Fehlerbehebung des Zielprogramms zulässig ist, und die Zugriffsbestimmungseinheit bestimmt, dass ein Zugriff auf den gegebenen Teil innerhalb der das Zielprogramm bildenden Teile zulässig ist.

8. Datenverarbeitungsvorrichtung nach Anspruch 6, wobei:
die Fehlerbehebungseinheit eine Funktion für eine Fehlerbehebung des normalen Programms aufweist und keine Funktion für eine Fehlerbehebung des Zielprogramms, das mit dem normalen Programm zusammenwirkt, aufweist, und
wenn die Fehlerbehebungseinheit die Fehlerbehebung des Zielprogramms durchführt, die Fehlerbehebungseinheit an die Steuereinheit eine Anfrage für eine Fehlerbehebung des Zielprogramms ausgibt und die Steuereinheit den sicheren Fehlerbeheber für eine Fehlerbehebung des Zielprogramms in Reaktion auf die Anfrage steuert, wobei der sichere Fehlerbeheber eine Funktion für eine Fehlerbehebung des Zielprogramms, das mit dem normalen Programm zusammenwirkt, aufweist.

9. Datenverarbeitungsvorrichtung nach Anspruch 8, wobei:
die Fehlerbehebungseinheit über die Steuereinheit an den sicheren Fehlerbeheber einen Prozessidentifizierer ausgibt, der das normale Programm identifiziert, für das die Fehlerbehebungseinheit eine Fehlerbehebung durchführen kann, und
der sichere Fehlerbeheber einen an einem Eingangspunkt des Zielprogramms positionierten Befehl zu einem Unterbrechungsbefehl ändert, wobei das Zielprogramm mit dem normalen Programm zusammenwirkt, das durch den durch die Fehlerbehebungseinheit ausgegebenen Prozessidentifizierer angegeben wird.

10. Datenverarbeitungsvorrichtung nach Anspruch 8, wobei:
wenn eine Fehlerbehebungsausnahme während der Ausführung des Zielprogramms in dem sicheren Modus erfasst wird, die Steuereinheit weiterhin eine Benachrichtigung der Fehlerbehebungsausnahme an die Fehlerbehebungseinheit sendet,
die Fehlerbehebungseinheit nach dem Empfang der Benachrichtigung an die Steuereinheit eine Anfrage für das Erzeugen von Fehlerbehebungsinformationen, die ein Fehlerbehebungsergebnis angeben, ausgibt, und
die Steuereinheit nach dem Empfang der Anfrage für das Erzeugen von Fehlerbehebungsinformationen den sicheren Fehlerbeheber für eine Fehlerbehebung des Zielprogramms steuert, um die Fehlerbehebungsinformationen zu erzeugen, wenn die Bestimmungseinheit bestimmt, dass die Fehlerbehebung des Zielprogramms zulässig ist, und die erzeugten Fehlerbehebungsinformationen an die Fehlerbehebungseinheit ausgibt.

11. Datenverarbeitungsvorrichtung nach Anspruch 8, die weiterhin umfasst:
eine erste Ergebnisanzeigeeinheit, die betriebsfähig ist zum Anzeigen eines Ergebnisses einer Fehlerbehebung des normalen Programms in einem ersten Anzeigebereich, und
eine zweite Ergebnisanzeigeeinheit, die betriebsfähig ist zum Anzeigen eines Ergebnisses einer Fehlerbehebung des Zielprogramms, das mit dem normalen Programm zusammenwirkt, in einem zweiten Anzeigebereich, der verschieden ist von dem ersten Anzeigebereich,
wobei, wenn das Zielprogramm und das damit zusammenwirkende normale Programm ausgeführt werden, die erste Ergebnisanzeigeeinheit das Ergebnis der Fehlerbehebung des normalen Programms in dem ersten Anzeigebereich anzeigt und die zweite Ergebnisanzeigeeinheit das Ergebnis der Fehlerbehebung des Zielprogramms in dem zweiten Anzeigebereich anzeigt.

12. Datenverarbeitungsvorrichtung nach Anspruch 8, wobei:
ein normales Betriebssystem in dem normalen Modus ausgeführt wird,
ein geschütztes Betriebssystem in dem sicheren Modus ausgeführt wird,
das normale Programm in dem normalen Modus als ein durch das normale Betriebssystem erzeugter Prozess ausgeführt wird,
die Fehlerbehebungseinheit in dem normalen Modus als ein auf dem normalen Betriebssystem ausgeführter Fehlerbeheber ausgeführt wird,
das Zielprogramm in dem sicheren Modus als ein durch das geschützte Betriebssystem erzeugter Prozess ausgeführt wird, und
der sichere Fehlerbeheber als eine Funktion des geschützten Betriebssystems implementiert wird.

13. Datenverarbeitungsvorrichtung nach Anspruch 6, wobei:
die Steuereinheit gemäß der durch die Fehlerbehebungseinheit ausgegebenen Anfrage für eine Fehlerbehebung des Zielprogramms die Bestimmungseinheit für das Vornehmen der Bestimmung steuert und, wenn die Bestimmungseinheit bestimmt, dass die Fehlerbehebung des Zielprogramms nicht zulässig ist, eine Fehlerbehebungsunterbindungsbenachrichtigung, die angibt, dass die Fehlerbehebung des Zielprogramms unterbunden wird, an die Fehlerbehebungseinheit ausgibt.

14. Datenverarbeitungsverfahren, das durch eine Datenverarbeitungsvorrichtung für das Steuern der Ausführung einer durch eine Fehlerbehebungseinheit durchgeführten Fehlerbehebung verwendet wird, wobei das Datenverarbeitungsverfahren umfasst:
Erhalten, von der Fehlerbehebungseinheit, eines Identifizierers der Fehlerbehebungseinheit,
Erhalten eines Prüfungswerts, der in einem vorgeschriebenen Teil eines Zielprogramms enthalten ist, das ein Ziel der Fehlerbehebung ist und gegen einen nicht-autorisierten Zugriff geschützt ist,
Vornehmen eines Vergleichs zwischen dem Identifizierer und dem Prüfungswert (S101, S102), und Vornehmen einer Bestimmung, ob die Fehlerbehebung des Zielprogramms zulässig ist, gemäß dem Vergleichsergebnis, und
Unterbinden der Ausführung der Fehlerbehebung des Zielprogramms, wenn die Bestimmungseinheit bestimmt, dass die Fehlerbehebung des Zielprogramms nicht zulässig ist,
wobei der vorgeschriebene Teil des Zielprogramms eine Zugriffssteuerliste enthält, die angibt, ob ein Zugriff auf die das Zielprogram bildenden Teile zulässig ist,
wobei der Schritt zum Erhalten des Identifizierers einen Teilschritt zum Erhalten der Zugriffssteuerliste aus dem vorgeschriebenen Teil des Zielprogramms enthält,
wobei das Datenverarbeitungsverfahren weiterhin einen Schritt zum Vornehmen einer Bestimmung, ob ein Zugriff auf die das Zielprogramm bildenden Teile zulässig ist, gemäß der Zugriffssteuerliste umfasst, und
in dem Schritt zum Unterbinden die Ausführung einer Fehlerbehebung eines gegebenen Teils innerhalb der das Zielprogramm bildenden Teile unterbunden wird, wenn die Fehlerbehebung des Zielprogramms zulässig ist und der Zugriff auf den gegebenen Teil innerhalb der das Zielprogramm bildenden Teile nicht zulässig ist, und die Ausführung der Fehlerbehebung des gegebenen Teils innerhalb der das Zielprogramm bildenden Teile gestattet wird, wenn die Fehlerbehebung des Zielprograms zulässig ist und der Zugriff auf den gegebenen Teil innerhalb der das Zielprogramm bildenden Teile zulässig ist,
die Datenverarbeitungsvorrichtung eine Vergleichswert-Speichereinheit enthält, die betriebsfähig ist zum Speichern eines Vergleichswerts, wobei die Vergleichswert-Speichereinheit gegen einen nicht-autorisierten Zugriff geschützt ist, und
in dem Schritt zum Vornehmen der Bestimmung eine vorgeschriebene Berechnung unter Verwendung des Prüfungswerts und des Identifizierers durchgeführt wird, wobei die Fehlerbehebung des Zielprogramms als zulässig bestimmt wird, wenn das Ergebnis der vorgeschriebenen Berechnung dem in der Vergleichswert-Speichereinheit gespeicherten Vergleichswert entspricht,
wobei die Zugriffssteuerliste eine Vielzahl von Adressbereichen enthält, wobei die Vielzahl der Adressbereiche jeweils den das Zielprogramm bildenden Teilen entspricht,
wobei die Zugriffssteuerliste eine Vielzahl von Zugriffsinformationen enthält, wobei jede aus der Vielzahl von Zugriffsinformationen angibt, ob der Zugriff auf einen der das Zielprogramm bildenden Teile zulässig ist, wobei die Vielzahl von Adressbereichen jeweils der Vielzahl von Zugriffsinformationen entsprechen, und
wobei die Zugriffsbestimmungseinheit die Bestimmung vornimmt, indem sie auf die Zugriffsinformation Bezug nimmt, die dem gegebenen Teil innerhalb der das Zielprogramm bildenden Teile entspricht.

15. Computerausführbares Steuerprogramm, das eine Datenverarbeitungsvorrichtung zum Steuern der Ausführung einer durch eine Fehlerbehebungseinheit durchgeführten Fehlerbehebung veranlasst, wobei das Steuerprogramm die Schritte des Datenverarbeitungsverfahrens gemäß Anspruch 14 durchführt.

16. Integrierte Schaltung, die konfiguriert ist für die Verwendung in einer Datenverarbeitungsvorrichtung, die die Ausführung einer durch eine Fehlerbehebungseinheit durchgeführten Fehlerbehebung steuert, wobei die integrierte Schaltung umfasst:
eine Fehlerbehebungseinheit, die betriebsfähig ist zum Durchführen der Ausführung einer Fehlerbehebung, wobei die Datenverarbeitungsvorrichtung die durch die Fehlerbehebungseinheit durchgeführte Ausführung der Fehlerbehebung steuert,
eine erste Erfassungseinheit, die betriebsfähig ist zum Erhalten eines Identifizierers der Fehlerbehebungseinheit von der Fehlerbehebungseinheit,
eine zweite Erfassungseinheit, die betriebsfähig ist zum Erhalten eines Prüfungswerts, der in einem vorgeschriebenen Teil eines Zielprogramms enthalten ist, das ein Ziel der Fehlerbehebung ist und gegen einen nicht-autorisierten Zugriff geschützt ist,
eine Bestimmungseinheit, die betriebsfähig ist zum Vornehmen eines Vergleichs zwischen dem Identifizierer und dem Prüfungswert und zum Bestimmen, ob die Fehlerbehebung des Zielprogramms zulässig ist, gemäß dem Vergleichsergebnis, und
eine Steuereinheit, die betriebsfähig ist zum Unterbinden der Ausführung der Fehlerbehebung des Zielprogramms, wenn die Bestimmungseinheit bestimmt, dass die Fehlerbehebung des Zielprogramms nicht zulässig ist,
wobei der vorgeschriebene Teil des Zielprogramms eine Zugriffssteuerliste enthält, die angibt, ob ein Zugriff auf die das Zielprogramm bildenden Teile zulässig ist,
wobei die zweite Erfassungseinheit eine Zugriffssteuerliste-Erfassungsteileinheit enthält, die betriebsfähig ist zum Erhalten der Zugriffssteuerliste aus dem vorgeschriebenen Teil des Zielprogramms,
wobei die Datenverarbeitungsvorrichtung weiterhin eine Zugriffsbestimmungseinheit umfasst, die betriebsfähig ist zum Bestimmen, ob der Zugriff auf die Teile des Zielprogramms zulässig ist, gemäß der durch die Zugriffssteuerliste-Erfassungsteileinheit erhaltenen Zugriffssteuerliste, und
wobei die Steuereinheit eine Ausführung der Fehlerbehebung eines gegebenen Teils innerhalb der das Zielprogramm bildenden Teile unterbindet, wenn die Bestimmungseinheit bestimmt, dass die Fehlerbehehebung des Zielprogramms zulässig ist, und die Zugriffsbestimmungseinheit bestimmt, dass der Zugriff auf den gegebenen Teil innerhalb der das Zielprogramm bildenden Teile nicht zulässig ist, und der Fehlerbehebungseinheit die Ausführung der Fehlerbehebung des gegebenen Teils innerhalb der das Zielprogramm bildenden Teile gestattet, wenn die Bestimmungseinheit bestimmt, dass die Fehlerbehebung des Zielprogramms zulässig ist, und die Zugriffsbestimmungseinheit bestimmt, dass der Zugriff auf den gegebenen Teil innerhalb der das Zielprogramm bildenden Teile zulässig ist,
wobei die Bestimmungseinheit eine Vergleichswert-Speicherteileinheit enthält, die betriebsfähig ist zum Speichern eines Vergleichswerts, wobei die Vergleichswert-Speicherteileinheit gegenüber einem nicht-autorisierten Zugriff geschützt ist,
wobei die Bestimmungseinheit eine vorgeschriebene Berechnung unter Verwendung des Prüfungswerts und des Identifizierers durchführt und bestimmt, dass die Fehlerbehebung des Zielprograms zulässig ist, wenn das Ergebnis der vorgeschriebenen Berechnung dem in der Vergleichswert-Speicherteileinheit gespeicherten Vergleichswert entspricht,
wobei die Zugriffssteuerliste eine Vielzahl von Adressbereichen enthält, wobei die Vielzahl von Adressbereichen jeweils den das Zielprogramm bildenden Teilen entsprechen,
wobei die Zugriffssteuerliste eine Vielzahl von Zugriffsinformationen enthält, wobei jede aus der Vielzahl von Zugriffsinformationen angibt, ob der Zugriff auf einen der das Zielprogramm bildenden Teile zulässig ist, wobei die Vielzahl von Adressbereichen jeweils der Vielzahl von Zugriffsinformationen entsprechen, und
wobei die Zugriffsbestimmungseinheit die Bestimmung vornimmt, indem sie auf die Zugriffsinformation Bezug nimmt, die dem gegebenen Teil innerhalb der das Zielprogramm bildenden Teile entspricht.

## Revendications

1. Appareil de traitement de données (1) comprenant :
une unité de mise au point (7) pouvant être mise en oeuvre pour exécuter une mise au point, l'appareil de traitement de données commandant l'exécution de la mise au point effectuée par l'unité de mise au point,
une première unité d'acquisition pouvant être mise en oeuvre pour acquérir un identificateur de l'unité de mise au point à partir de l'unité de mise au point,
une seconde unité d'acquisition pouvant être mise en oeuvre pour acquérir une valeur de vérification incluse dans une partie prescrite d'un programme cible (8) qui représente la cible de mise au point et qui est protégé contre tout accès non autorisé,
une unité d'évaluation (22) pouvant être mise en oeuvre pour réaliser une comparaison entre l'identificateur et la valeur de vérification, et pour réaliser l'évaluation de ce que la mise au point du programme cible est autorisée en fonction du résultat de la comparaison, et
une unité de commande (21) pouvant être mise en oeuvre pour interdire l'exécution de la mise au point du programme cible lorsque l'unité d'évaluation a jugé que la mise au point du programme cible n'est pas autorisée, où
la partie prescrite du programme cible inclut une liste de contrôles d'accès (60) qui montre s'il est permis d'accéder à chacune des parties constituant le programme cible,
la seconde unité d'acquisition inclut une sous unité d'acquisition de liste de contrôles d'accès pouvant être mise en oeuvre pour acquérir la liste de contrôles d'accès à partir de la partie prescrite du programme cible,
l'appareil de traitement de données comprend en outre une unité d'évaluation d'accès pouvant être mise en oeuvre pour juger de ce que l'accès à chacune des parties constituant le programme cible est autorisé en fonction de la liste de contrôles d'accès acquise par la sous unité d'acquisition de liste de contrôles d'accès, et
l'unité de commande interdit l'exécution de la mise au point d'une partie donnée de constituants du programme cible lorsque l'unité d'évaluation a jugé que la mise au point du programme cible est autorisée et lorsque l'unité d'évaluation d'accès a jugé que l'accès à la partie donnée des constituants du programme cible n'est pas autorisé, et elle autorise l'unité de mise au point à exécuter la mise au point de la partie donnée de constituants du programme cible lorsque l'unité d'évaluation a jugé que la mise au point du programme cible est autorisée et lorsque l'unité d'évaluation d'accès a jugé que l'accès à la partie donnée des constituants du programme cible est autorisé.

2. Appareil de traitement de données selon la revendication 1, dans lequel :
la liste de contrôles d'accès inclut une pluralité de symboles, l'un de la pluralité de symboles étant inclut dans chacune des parties constituant le programme cible,
la liste de contrôles d'accès inclut une pluralité d'éléments d'informations d'accès, chacun de la pluralité des éléments des informations d'accès indiquant s'il est permis d'accéder à chacune des parties constituant le programme cible, la pluralité des symboles correspondant respectivement à la pluralité des éléments des informations d'accès, et
l'unité d'évaluation d'accès effectue l'évaluation en faisant référence aux informations d'accès qui correspondent à un symbole inclus dans la partie donnée de constituants du programme cible.

3. Appareil de traitement de données selon la revendication 1, dans lequel :
la partie prescrite du programme cible inclut une pluralité de valeurs de vérification,
la partie prescrite du programme cible inclut une pluralité de listes de contrôles d'accès, chacune de la pluralité des valeurs de vérification correspondant à au moins l'une de la pluralité des listes de contrôles d'accès,
l'unité d'évaluation effectue l'évaluation en comparant chacune de la pluralité des valeurs de vérification à l'identificateur, et
l'unité d'évaluation d'accès effectue l'évaluation sur la base de l'une de la pluralité des listes de contrôles d'accès correspondant à l'une de la pluralité des valeurs de vérification, lorsque l'unité d'évaluation a jugé que ladite valeur de la pluralité des valeurs de vérification correspond à l'identificateur.

4. Appareil de traitement de données selon la revendication 1, comprenant en outre une unité d'affichage, où
l'unité de commande inclut une sous unité de commande d'afficheur pouvant être mise en oeuvre pour commander l'unité d'affichage afin qu'elle montre que l'exécution de la mise au point de la partie donnée du programme cible est interdite lorsque l'unité de commande interdit l'exécution de la mise au point de la partie donnée de constituants du programme cible, ainsi que pour commander l'unité d'affichage afin qu'elle montre le résultat de la mise au point de la partie donnée du programme cible lorsque l'unité de commande autorise l'exécution de la mise au point de la partie donnée de constituants du programme cible.

5. Appareil de traitement de données selon la revendication 1, comprenant en outre un domaine sécurisé, le domaine sécurisé comprenant un mécanisme permettant d'interdire tout accès autorisé depuis l'extérieur, où
l'appareil de traitement de données bascule entre un mode normal et un mode sécurisé, et il utilise le domaine sécurisé pour effectuer une opération dans le mode sécurisé,
l'appareil de traitement de données comprend en outre une unité de commutation pouvant être mise en oeuvre pour basculer entre le mode normal et le mode sécurisé,
un programme normal qui s'exécute dans le mode normal est capable d'accéder à un programme sécurisé qui s'exécute dans le mode sécurisé en envoyant une demande de traitement prescrit au programme sécurisé par l'intermédiaire de l'unité de commutation,
le programme cible est stocké à l'intérieur du domaine sécurisé,
la seconde unité d'acquisition acquiert la valeur de vérification auprès de la partie prescrite du programme cible à l'intérieur du domaine sécurisé, et
l'unité d'évaluation effectue l'évaluation à l'intérieur du domaine sécurisé.

6. Appareil de traitement de données selon la revendication 5, dans lequel :
l'unité de mise au point réside à l'extérieur du domaine sécurisé et fonctionne dans le mode normal,
l'appareil de traitement de données comprend en outre un dispositif de mise au point sécurisé qui est inclus dans le domaine sécurisé et effectue la mise au point dans le mode sécurisé,
l'unité de mise au point délivre à l'unité de commande une demande dans le but de mettre au point le programme cible, et
en fonction de la demande, l'unité de commande pilote l'unité d'évaluation pour qu'elle réalise l'évaluation, et lorsque l'unité d'évaluation a jugé que la mise au point du programme cible n'est pas autorisée, interdit au dispositif de mise au point sécurisé de mettre au point le programme cible se rapportant à la demande.

7. Appareil de traitement de données selon la revendication 6, dans lequel :
l'unité d'évaluation d'accès effectue l'évaluation à l'intérieur du domaine sécurisé, et
l'unité de commande interdit au dispositif de mise au point sécurisé d'exécuter la mise au point d'une partie donnée de constituants du programme cible se rapportant à la demande lorsque l'unité d'évaluation a jugé que la mise au point du programme cible est autorisée et que l'unité d'évaluation d'accès a jugé que l'accès à la partie donnée des constituants du programme cible n'est pas autorisé, et elle autorise le dispositif de mise au point sécurisé à exécuter la mise au point de la partie donnée des constituants du programme cible lorsque l'unité d'évaluation a jugé que la mise au point du programme cible est autorisée et que l'unité d'évaluation d'accès a jugé que l'accès à la partie donnée des constituants du programme cible est autorisé.

8. Appareil de traitement de données selon la revendication 6, dans lequel :
l'unité de mise au point possède une fonction pour mettre au point le programme normal et ne possède pas de fonction pour mettre au point le programme cible qui coopère avec le programme normal, et
lorsque l'unité de mise au point effectue la mise au point du programme cible, l'unité de mise au point délivre à l'unité de commande la demande de mise au point du programme cible, et l'unité de commande pilote le dispositif de mise au point sécurisé pour qu'il mette au point le programme cible en réponse à la demande, le dispositif de mise au point sécurisé possédant une fonction pour mettre au point le programme cible qui coopère avec le programme normal.

9. Appareil de traitement de données selon la revendication 8, dans laquelle :
l'unité de mise au point délivre en sortie, par l'intermédiaire de l'unité de commande, au dispositif de mise au point sécurisé, un identificateur de traitement qui identifie le programme normal que peut mettre au point l'unité de mise au point, et
le dispositif de mise au point sécurisé modifie une instruction située au niveau d'un point d'entrée du programme cible en une instruction d'interruption, le programme cible coopérant avec le programme normal indiqué par l'identificateur de traitement délivré par l'unité de mise au point.

10. Appareil de traitement de données selon la revendication 8, dans lequel :
lorsqu'une exception de mise au point est détectée pendant l'exécution du programme cible dans le mode sécurisé, l'unité de commande transmet en outre à l'unité de mise au point une notification concernant l'exception de mise au point,
à la réception de la notification, l'unité de mise au point délivre à l'unité de commande une demande dans le but de générer des informations de mise au point montrant le résultat de la mise au point, et
à la réception de la demande de génération des informations de mise au point, l'unité de commande pilote le dispositif de mise au point sécurisé pour qu'il mette au point le programme cible afin de générer les informations de mise au point lorsque l'unité d'évaluation a jugé que la mise au point du programme cible est autorisée, et elle délivre à l'unité de mise au point les informations de mise au point générées.

11. Appareil de traitement de données selon la revendication 8, comprenant en outre :
une première unité d'affichage de résultat pouvant être mise en oeuvre pour afficher le résultat de la mise au point du programme normal dans une première zone d'affichage, et
une seconde unité d'affichage de résultat pouvant être mise en oeuvre pour afficher le résultat de la mise au point du programme cible qui coopère avec le programme normal dans une seconde zone d'affichage qui est différente de la première zone d'affichage, où
lorsque le programme cible et le programme normal, qui coopèrent l'un avec l'autre, s'exécutent, la première unité d'affichage de résultat montre le résultat de la mise au point du programme normal dans la première zone d'affichage et la seconde unité d'affichage de résultat montre le résultat de la mise au point du programme cible dans la seconde zone d'affichage.

12. Appareil de traitement de données selon la revendication 8, dans lequel :
un système d'exploitation normal opère dans le mode normal, un système d'exploitation protégé opère dans le mode sécurisé,
le programme normal opère dans le mode normal sous forme d'un traitement généré par le système d'exploitation normal,
l'unité de mise au point opère dans le mode normal sous forme d'un dispositif de mise au point qui opère sur le système d'exploitation normal,
le programme cible opère dans le mode sécurisé sous forme d'un traitement généré par le système d'exploitation protégé, et
le dispositif de mise au point sécurisé est mis en service sous forme d'une fonction du système d'exploitation protégé.

13. Appareil de traitement de données selon la revendication 6, dans lequel :
conformément à la demande de mise au point du programme cible délivrée en sortie par l'unité de mise au point, l'unité de commande pilote l'unité d'évaluation pour qu'elle effectue l'évaluation, et lorsque l'unité d'évaluation a jugé que la mise au point du programme cible n'est pas autorisée, elle délivre à l'unité de mise au point une notification d'interdiction de mise au point montrant que la mise au point du programme cible est interdite.

14. Procédé de traitement de données utilisé par un appareil de traitement de données permettant de commander l'exécution d'une mise au point effectuée par une unité de mise au point, le procédé de traitement de données comprenant :
l'acquisition à partir de l'unité de mise au point d'un identificateur de l'unité de mise au point,
l'acquisition d'une valeur de vérification incluse dans une partie prescrite d'un programme cible qui représente la cible de mise au point et qui est protégé contre tout accès non autorisé,
la réalisation d'une comparaison entre l'identificateur et la valeur de vérification (S101, S102), et la réalisation de l'évaluation de ce que la mise au point du programme cible est autorisée en fonction du résultat de la comparaison, et
l'interdiction de l'exécution de la mise au point du programme cible lorsque l'unité d'évaluation a jugé que la mise au point du programme cible n'est pas autorisée, où
la partie prescrite du programme cible inclut une liste de contrôles d'accès qui montre s'il est permis d'accéder à chacune des parties constituant le programme cible,
l'étape d'acquisition de l'identificateur inclut une sous étape d'acquisition de la liste de contrôles d'accès à partir de la partie prescrite du programme cible,
le procédé de traitement de données comprend en outre une étape d'évaluation de ce que l'accès à chacune des parties constituant le programme cible est autorisé en fonction de la liste de contrôles d'accès, et
lors de l'étape d'interdiction, l'exécution de la mise au point d'une partie donnée de constituants du programme cible est interdite lorsque la mise au point du programme cible est autorisée et que l'accès à la partie donnée des constituants du programme cible n'est pas autorisé, et l'exécution de la mise au point de la partie donnée de constituants du programme cible est autorisée lorsque la mise au point du programme cible est autorisée et que l'accès à la partie donnée des constituants du programme cible est autorisé,
l'appareil de traitement de données inclut une unité de maintien de valeur de comparaison pouvant être mise en oeuvre pour stocker une valeur de comparaison, l'unité de maintien de valeur de comparaison étant protégée contre tout accès non autorisé, et
lors de l'étape de réalisation d'une évaluation, un calcul prescrit utilisant la valeur de vérification et l'identificateur est effectué et la mise au point du programme cible est évaluée comme étant autorisée lorsque le résultat du calcul prescrit correspond à la valeur de comparaison stockée dans l'unité de maintien de valeur de comparaison,
dans lequel
la liste de contrôles d'accès inclut une pluralité de plages d'adressage, la pluralité de plages d'adressage correspondant respectivement à des parties constituant le programme cible,
la liste de contrôles d'accès inclut une pluralité d'éléments d'informations d'accès, chacun de la pluralité des éléments des informations d'accès indiquant s'il est permis d'accéder à chacune des parties constituant le programme cible, la pluralité des plages d'adressage correspondant respectivement à la pluralité des éléments des informations d'accès, et
l'unité d'évaluation d'accès effectue l'évaluation en faisant référence aux informations d'accès qui correspondent à la partie donnée de constituants du programme cible.

15. Programme de commande pouvant être lu par ordinateur qui amène un appareil de traitement de données à commander l'exécution d'une mise au point effectuée par une unité de mise au point, le programme de commande exécutant les étapes du procédé de traitement de données conforme à la revendication 14.

16. Circuit intégré configuré pour être utilisé dans un appareil de traitement de données qui commandent l'exécution d'une mise au point effectuée par une unité de mise au point, le circuit intégré comprenant :
une unité de mise au point pouvant être mise en oeuvre pour exécuter une mise au point, l'appareil de traitement de données commandant l'exécution de la mise au point effectuée par l'unité de mise au point,
une première unité d'acquisition pouvant être mise en oeuvre pour acquérir un identificateur de l'unité de mise au point à partir de l'unité de mise au point,
une seconde unité d'acquisition pouvant être mise en oeuvre pour acquérir une valeur de vérification incluse dans une partie prescrite d'un programme cible qui représente la cible de mise au point et qui est protégé contre tout accès non autorisé,
une unité d'évaluation pouvant être mise en oeuvre pour réaliser une comparaison entre l'identificateur et la valeur de vérification, et pour réaliser l'évaluation de ce que la mise au point du programme cible est autorisée en fonction du résultat de la comparaison, et
une unité de commande pouvant être mise en oeuvre pour interdire l'exécution de la mise au point du programme cible lorsque l'unité d'évaluation a jugé que la mise au point du programme cible n'est pas autorisée,
où
la partie prescrite du programme cible inclut une liste de contrôles d'accès qui montre s'il est permis d'accéder à chacune des parties constituant le programme cible,
la seconde unité d'acquisition inclut une sous unité d'acquisition de liste de contrôles d'accès pouvant être mise en oeuvre pour acquérir la liste de contrôles d'accès à partir de la partie prescrite du programme cible,
l'appareil de traitement de données comprend en outre une unité d'évaluation d'accès pouvant être mise en oeuvre pour juger de ce que l'accès à chacune des parties constituant le programme cible est autorisé en fonction de la liste de contrôles d'accès acquise par la sous unité d'acquisition de liste de contrôles d'accès, et
l'unité de commande interdit l'exécution de la mise au point d'une partie donnée de constituants du programme cible lorsque l'unité d'évaluation a jugé que la mise au point du programme cible est autorisée et lorsque l'unité d'évaluation d'accès a jugé que l'accès à la partie donnée des constituants du programme cible n'est pas autorisé, et elle autorise l'unité de mise au point à exécuter la mise au point de la partie donnée de constituants du programme cible lorsque l'unité d'évaluation a jugé que la mise au point du programme cible est autorisée et lorsque l'unité d'évaluation d'accès a jugé que l'accès à la partie donnée des constituants du programme cible est autorisé,
l'unité d'évaluation inclut une sous unité de maintien de valeur de comparaison pouvant être mise en oeuvre pour stocker une valeur de comparaison, la sous unité de maintien de valeur de comparaison étant protégée contre tout accès non autorisé, et
l'unité d'évaluation effectue un calcul prescrit utilisant la valeur de vérification et l'identificateur, et elle évalue que la mise au point du programme cible est autorisée lorsque le résultat du calcul prescrit correspond à la valeur de comparaison stockée dans la sous unité de maintien de valeur de comparaison,
où
la liste de contrôles d'accès inclut une pluralité de plages d'adressage, la pluralité de plages d'adressage correspondant respectivement à des parties constituant le programme cible,
la liste de contrôles d'accès inclut une pluralité d'éléments d'informations d'accès, chacun de la pluralité des éléments des informations d'accès indiquant s'il est permis d'accéder à chacune des parties constituant le programme cible, la pluralité des plages d'adressage correspondant respectivement à la pluralité des éléments des informations d'accès, et
l'unité d'évaluation d'accès effectue l'évaluation en faisant référence aux informations d'accès qui correspondent à la partie donnée de constituants du programme cible.
